# EUROPEAN PATENT APPLICATION

(11) **EP 4 387 242 A1**
(43) Date of publication of application: **19.06.2024**
(21) Application number: 22871809.4
(22) Date of filing: 07.09.2022
(51) Int. Cl.: H04N 21/436

(54) **SCREEN MIRRORING CONTROL METHOD AND APPARATUS**

(30) Priority: 27.09.2021 CN 202111133355
(71) Applicant: Huawei Technologies Co., Ltd., Shenzhen, Guangdong 518129 (CN)
(72) Inventor: ZHANG, Yingying, Shenzhen, Guangdong 518129 (CN); HU, Shiyao, Shenzhen, Guangdong 518129 (CN); SHU, Jiakang, Shenzhen, Guangdong 518129 (CN); WU, Haoran, Shenzhen, Guangdong 518129 (CN); YU, Yongchao, Shenzhen, Guangdong 518129 (CN)
(74) Representative: Goddar, Heinz J.
(86) International application number: PCT/CN2022/117607
(87) International publication number: WO 2023/045761

(57) **Abstract**

This application relates to a projection control method and an apparatus. The method may be applied to a receive end device. The receive end device maintains a resource list in which one or more unfinished projection resources is recorded. The unfinished projection resource includes a first projection resource that is currently projected and/or another projection resource that waits for projection. The method includes: receiving, in a process of displaying the first projection resource through projection, a first request that is from a transmit end device and that is used to request to display a second projection resource through projection; and if a request ranking of the second projection resource is reserved projection, recording the second projection resource in the resource list, to display the second projection resource through projection after completing projection display of an unfinished projection resource whose projection ranking is before the second projection resource in the resource list. This implements reserved projection of the projection resource, so that an occasion for sending the first request by a user is no longer limited, the receive end device can sequentially display projection resources reserved by a same user or different users, and resource waste of the receive end device is avoided.

## Description

This application claims priority to Chinese Patent Application No. 202111133355.4, filed with the China National Intellectual Property Administration on September 27, 2021 and entitled "PROJECTION CONTROL METHOD AND APPARATUS", which is incorporated herein by reference in its entirety.

### TECHNICAL FIELD

This application relates to the field of projection technologies, and in particular, to a projection control method and an apparatus.

### BACKGROUND

With rapid development of information technologies, smart all-scenario devices are increasingly applied in people's home life, and there are more manners of data sharing between the devices. A projection technology based on a digital living network alliance (digital living network alliance, DLNA) is widely used in people's life, and thus becomes an essential part of smart all-scenario.

In the conventional technology, when receiving a projection request sent by a transmit end device, a receive end device immediately responds to the projection request, to project a resource requested by the transmit end device for projection. However, because the receive end device responds to the projection request in real time, a user cannot implement reserved projection. This greatly limits an occasion for operating the receive end device by the user to send the projection request, and affects projection experience of the user.

### SUMMARY

In view of this, embodiments of this application provide a projection control method and an apparatus, to resolve technical problems that reserved projection cannot be implemented and an occasion for operating a transmit end device by a user to send a projection request is limited. This can implement the reserved projection and improve user experience.

According to a first aspect, an embodiment of this application provides a projection control method, applied to a receive end device. The receive end device maintains a resource list. The resource list is used to record one or more unfinished projection resources. The unfinished projection resource includes a first projection resource that is currently displayed by the receive end device through projection and/or another projection resource that is reserved and waits for projection display. The method includes:
the receive end device receives a first request from a transmit end device in a process of displaying the first projection resource through projection, where the first request is used to request to display a second projection resource through projection; and
if a request ranking corresponding to the second projection resource is reserved projection, the receive end device records the second projection resource in the resource list, to display the second projection resource through projection after completing projection display of an unfinished projection resource whose projection ranking is before the second projection resource in the resource list.

According to the first aspect, the reserved projection can be implemented, so that an occasion for sending the first request by a user on the transmit end device is no longer limited, the user can trigger, on the transmit end device, reserved projection display of a projection resource that the user intends to view, and the receive end device can sequentially display projection resources reserved by a same user or different users. In addition, the receive end device can immediately display a next unfinished projection resource after completely displaying an unfinished projection resource, to implement "seamless" projection display of the unfinished projection resource in the resource list. This avoids resource waste of the receive end device.

In a possible implementation, the method further includes:
the receive end device immediately displays the second projection resource through projection if the request ranking corresponding to the second projection resource is immediate projection.

In this way, the reserved projection is implemented, and a requirement that the user needs to immediately display a projection resource can be met. This brings convenience to resource projection of the user.

In a possible implementation, that the receive end device immediately displays the second projection resource through projection if the request ranking corresponding to the second projection resource is immediate projection specifically includes:
if the request ranking corresponding to the second projection resource is the immediate projection, the receive end device stops displaying the first projection resource, and immediately displays the second projection resource through projection,
the receive end device deletes the first projection resource recorded in the resource list, or
the receive end device records a display progress of the first projection resource, and does not delete the first projection resource recorded in the resource list, to continue displaying the first projection resource based on the display progress after completing projection display of the second projection resource.

In this way, if the first projection resource recorded in the resource list is deleted, projection switching between the second projection resource and the first projection resource can be directly implemented. However, if the first projection resource recorded in the resource list is reserved, and the display progress of the first projection resource is further recorded, after the second projection resource is displayed, the receive end device may continue to display the first projection resource based on the display progress of the first projection resource recorded in the resource list.

In a possible implementation, the reserved projection includes any one of sequential projection, next projection, and specified reserved projection, and the specified reserved projection corresponds to specified projection time. In this way, the user can set the request ranking of the second projection resource based on a projection requirement of the second projection resource, so that the receive end device can perform reserved projection on the second projection resource based on a user requirement.

In a possible implementation, that the receive end device records the second projection resource in the resource list if a request ranking corresponding to the second projection resource is reserved projection specifically includes:
if the request ranking corresponding to the second projection resource is the sequential projection, the receive end device records, in the resource list, the second projection resource as a final unfinished projection resource;
if the request ranking corresponding to the second projection resource is the next projection, the receive end device records, in the resource list, the second projection resource as an unfinished projection resource immediately after the first projection resource; or
if the request ranking corresponding to the second projection resource is the specified reserved projection, the receive end device records, in the resource list, the second projection resource based on specified projection time corresponding to the second projection resource.

In this way, the receive end device can correspondingly update the resource list based on different reserved projection types indicated by the user, to ensure that the reserved projection is performed in an orderly manner.

In a possible implementation, the first request further indicates projection information of the second projection resource, projection information of each unfinished projection resource is recorded in the resource list, and the projection information includes a uniform resource identifier URI. The method further includes:
the receive end device obtains the second projection resource from a server based on a URI of the second projection resource before displaying the second projection resource through projection.

This can simplify a process in which the receive end device obtains the second projection resource, and facilitate smooth projection display of the second projection resource.

In a possible implementation, the first request further indicates the request ranking of the second projection resource. The method further includes:
determining, based on the first request, the request ranking corresponding to the second projection resource.

In a possible implementation, the method further includes:
if the first request does not indicate the request ranking of the second projection resource, determining a default request ranking preset in the receive end as the request ranking corresponding to the second projection resource.

In this way, when the first request indicates the request ranking, the receive end device can directly determine the request ranking of the second projection resource based on the first request. However, when the first request does not indicate the request ranking, the receive end device can determine the request ranking of the second projection resource based on a default request ranking of the receive end device.

In a possible implementation, a projection ranking corresponding to each unfinished projection resource is recorded in the resource list. In this way, the receive end device can perform projection display on the unfinished projection resource from early to late based on the projection ranking.

In a possible implementation, the receive end device is a device that supports a DLNA protocol and is located in a same local area network as the transmit end device, and the unfinished projection resource in the resource list is a projection resource that is requested by one or more transmit end devices for projection display.

In a possible implementation, the method further includes: The receive end device displays the resource list. In this way, the user can learn about an overall projection progress of the receive end device timely based on the displayed resource list.

In a possible implementation, the method further includes:
in response to a received resource list viewing request, the receive end device sends resource-related information of each unfinished projection resource in the resource list to a transmit end device that sends the resource list viewing request, so that the transmit end device that sends the resource list viewing request displays the resource-related information of the unfinished projection resource.

In this way, the user of the transmit end device can send the resource list viewing request to the receive end device, to view the resource-related information of the unfinished projection resource, and learn about the overall projection progress of the receive end device and an unfinished projection resource that has been recorded by the receive end device.

In a possible implementation, the method further includes:
sending a projection progress of the second projection resource to the transmit end device that sends the first request, so that the transmit end device displays the projection progress of the second projection resource.

In this way, the user who requests to display the second projection resource through projection can learn about the projection progress of the second projection resource by using the transmit end device, and timely arrange, based on the projection progress, a related issue of viewing the second projection resource.

In a possible implementation, the second projection resource includes at least one projectable object, the first request further includes a display ranking of each projectable object in all projectable objects in the second projection resource, and a projection ranking corresponding to each projectable object in the unfinished projection resource is recorded in the resource list. The method further includes:
in a process of displaying the second projection resource, performing projection display on each projectable object in the second projection resource from early to late based on the display ranking.

In this way, when the second projection resource includes a plurality of projectable objects, each projection object is displayed through projection based on a display ranking, to meet a user requirement for viewing the second projection resource.

In a possible implementation, the method further includes:
the receive end device sends a projection display prompt message to a transmit end device corresponding to a third projection resource in the resource list, where the projection display prompt message indicates the transmit end device corresponding to the third projection resource to give a user a prompt that the third projection resource is to be displayed or is currently displayed.

In this way, a user who requests to display the third projection resource through projection may learn about, based on the prompt sent by the transmit end device to the user in response to the projection display prompt message, a projection status of the third projection resource, and timely view the third projection resource in front of the receive end device.

According to a second aspect, an embodiment of this application provides a projection control method, applied to a transmit end device. The method includes:
receiving a first input of a user, where the first input is used to trigger a request for displaying a second projection resource through projection;
sending a first prompt, where the first prompt reminds the user to indicate a request ranking of the second projection resource;
receiving a second input of the user, and determining the request ranking of the second projection resource;
generating a first request based on the second projection resource and the request ranking of the second projection resource, where the first request is used to request to display the second projection resource through projection; and
sending the first request to a receive end device.

In this way, the user can select the second projection resource that needs to be projected and the request ranking of the second projection resource, to implement on-demand projection of the second projection resource.

In a possible implementation, the request ranking includes immediate projection or reserved projection, the reserved projection includes any one of sequential projection, next projection, and specified reserved projection, and the specified reserved projection corresponds to specified projection time. In this way, the user can set the request ranking of the second projection resource to any one of the immediate projection, the sequential projection, the next projection, and the specified reserved projection as required. This brings more projection options to the user.

In a possible implementation, the receiving a second input of the user, and determining the request ranking of the second projection resource specifically includes:
receiving the second input of the user on an immediate projection control, and determining the request ranking of the second projection resource as the immediate projection; or receiving the second input of the user on a reserved projection control, and determining the request ranking of the second projection resource as the reserved projection.

In a possible implementation, the determining the request ranking of the second projection resource as the reserved projection specifically includes:
receiving a third input of the user on a sequential projection control, and determining the request ranking of the second projection resource as the sequential projection;
receiving a third input of the user on a next projection control, and determining the request ranking of the second projection resource as the next projection; or
receiving a third input of the user on a specified reserved projection control, and determining the request ranking of the second projection resource as the specified reserved projection.

In a possible implementation, the method further includes:
receiving a projection progress that is of the second projection resource and that is sent by the receive end device, and displaying the projection progress of the second projection resource. In this way, the user can learn about a projection progress of the second projection resource timely, and make a plan to ensure that the user can view the second projection resource timely in front of the receive end device when the receive end device displays the second projection resource through projection.

In a possible implementation, the second projection resource includes at least one projectable object, and the projectable object includes any one or more of a video, an audio, a document, and a picture.

In a possible implementation, before the first input of the user is received, the method further includes:
receiving a fourth input through which the user selects the at least one projectable object. In this way, the user can select a projectable object in the second projection resource based on a user requirement, to implement one-time projection of a plurality of projectable objects, to simplify an operation of the user, and reduce time of the user.

In a possible implementation, before the first request is sent to the receive end device, the method further includes:
displaying identification information of at least one candidate receive end device, so that the user selects a receive end device from the at least one candidate receive end device. In this way, the user can select, based on a user requirement, a receive end device on which the second projection resource is displayed.

In a possible implementation, the method further includes:
receiving a projection display prompt message sent by the transmit end device, and in response to the projection display prompt message, giving the user a prompt that the receive end device is to display or currently displays the second projection resource.

In this way, the user of the transmit end device can learn about, based on the prompt that is sent by the transmit end device to the user in response to the projection display prompt message, a projection status of the second projection resource, and timely view the second projection resource in front of the receive end device.

In a possible implementation, the transmit end device is a device that supports a DLNA protocol and that is located in a same local area network as the receive end device.

In a possible implementation, the second projection resource includes a uniform resource identifier URI.

According to a third aspect, an embodiment of this application provides a projection control apparatus, used in a receive end device. The receive end device maintains a resource list. The resource list is used to record one or more unfinished projection resources. The unfinished projection resource includes a first projection resource that is currently displayed by the receive end device through projection and/or another projection resource that is reserved and waits for projection display. The apparatus includes:
a request receiving module, where the receive end device receives a first request from a transmit end device in a process of displaying the first projection resource through projection, and the first request is used to request to display a second projection resource through projection; and
a first update module, where if a request ranking corresponding to the second projection resource is reserved projection, the receive end device records the second projection resource in the resource list, to display the second projection resource through projection after completing projection display of an unfinished projection resource whose projection ranking is before the second projection resource in the resource list.

In a possible implementation, the apparatus may further include:
an immediate projection module, where the receive end device immediately displays the second projection resource through projection if the request ranking corresponding to the second projection resource is immediate projection.

In a possible implementation, the immediate projection module may include:
a projection display submodule, where if the request ranking corresponding to the second projection resource is the immediate projection, the receive end device stops displaying the first projection resource, and immediately displays the second projection resource through projection; and
a resource list update submodule, where the receive end device deletes the first projection resource recorded in the resource list; or
the receive end device records a display progress of the first projection resource, and does not delete the first projection resource recorded in the resource list, to continue displaying the first projection resource based on the display progress after completing projection display of the second projection resource.

In a possible implementation, the reserved projection includes any one of sequential projection, next projection, and specified reserved projection, and the specified reserved projection corresponds to specified projection time.

In a possible implementation, the first update module may include:
a sequential update submodule, where if the request ranking corresponding to the second projection resource is the sequential projection, the receive end device records the second projection resource as a final unfinished projection resource in the resource list;
a next update submodule, where if the request ranking corresponding to the second projection resource is the next projection, the receive end device records, in the resource list, the second projection resource as an unfinished projection resource immediately after the first projection resource; or
a specified update submodule, where if the request ranking corresponding to the second projection resource is the specified reserved projection, the receive end device records, in the resource list, the second projection resource based on specified projection time corresponding to the second projection resource.

In a possible implementation, the first request further indicates projection information of the second projection resource, projection information of each unfinished projection resource is recorded in the resource list, and the projection information includes a uniform resource identifier URI. The apparatus further includes:
a resource obtaining module, where the receive end device obtains the second projection resource from a server based on a URI of the second projection resource before displaying the second projection resource through projection.

In a possible implementation, the first request further indicates the request ranking of the second projection resource. The apparatus may further include:
a first request ranking determining module, configured to determine, based on the first request, the request ranking corresponding to the second projection resource.

In a possible implementation, the apparatus may further include:
a second request ranking determining module, configured to determine a default request ranking preset in the receive end as the request ranking corresponding to the second projection resource if the first request does not indicate the request ranking of the second projection resource.

In a possible implementation, a projection ranking corresponding to each unfinished projection resource is recorded in the resource list.

In a possible implementation, the receive end device is a device that supports a DLNA protocol and is located in a same local area network as the transmit end device, and the unfinished projection resource in the resource list is a projection resource that is requested by one or more transmit end devices for projection display.

In a possible implementation, the apparatus may further include:
a resource list display module, where the receive end device displays the resource list.

In a possible implementation, the apparatus may further include:
a first information sending module, where in response to a received resource list viewing request, the receive end device sends, resource-related information of each unfinished projection resource in the resource list to a transmit end device that sends the resource list viewing request, so that the transmit end device that sends the resource list viewing request displays the resource-related information of the unfinished projection resource.

In a possible implementation, the apparatus may further include:
a progress sending module, where a projection progress of the second projection resource is sent to the transmit end device that sends the first request, so that the transmit end device displays the projection progress of the second projection resource.

In a possible implementation, the second projection resource includes at least one projectable object, the first request further includes a display ranking of each projectable object in all projectable objects in the second projection resource, and a projection ranking corresponding to each projectable object in the unfinished projection resource is recorded in the resource list. The apparatus further includes:
a projection display module, where in a process of displaying the second projection resource, projection display of each projectable object in the second projection resource is performed from early to late based on the display ranking.

In a possible implementation, the apparatus may further include:
a second information sending module, where the receive end device sends a projection display prompt message to a transmit end device corresponding to a third projection resource in the resource list, and the projection display prompt message indicates the transmit end device corresponding to the third projection resource to give a user a prompt that the third projection resource is to be displayed or is currently displayed.

For beneficial effects of modules of the apparatus in the third aspect, refer to beneficial effects of corresponding steps in the projection control method in the first aspect. Details are not described herein again.

According to a fourth aspect, an embodiment of this application provides a projection control apparatus, used in a transmit end device. The apparatus includes:
a first receiving module, configured to receive a first input of a user, where the first input is used to trigger a request for displaying a second projection resource through projection;
a first prompt sending module, configured to send a first prompt, where the first prompt reminds the user to indicate a request ranking of the second projection resource;
a second receiving module, configured to: receive a second input of the user, and determine the request ranking of the second projection resource;
a request generation module, configured to generate a first request based on the second projection resource and the request ranking of the second projection resource, where the first request is used to request to display the second projection resource through projection; and
a request sending module, configured to send the first request to a receive end device.

In a possible implementation, the request ranking includes immediate projection or reserved projection, the reserved projection includes any one of sequential projection, next projection, and specified reserved projection, and the specified reserved projection corresponds to specified projection time.

In a possible implementation, the second receiving module may include:
a receiving submodule, configured to: receive the second input of the user on an immediate projection control, and determine the request ranking of the second projection resource as the immediate projection; or receive the second input of the user on a reserved projection control, and determine the request ranking of the second projection resource as the reserved projection.

In a possible implementation, the receiving submodule may include:
a first receiving submodule, configured to: receive a third input of the user on a sequential projection control, and determine the request ranking of the second projection resource as the sequential projection;
a second receiving submodule, configured to: receive a third input of the user on a next projection control, and determine the request ranking of the second projection resource as the next projection; or
a third receiving submodule, configured to: receive a third input of the user on a specified reserved projection control, and determine the request ranking of the second projection resource as the specified reserved projection.

In a possible implementation, the apparatus may further include:
a progress receiving module, configured to: receive a projection progress that is of the second projection resource and that is sent by the receive end device, and display the projection progress of the second projection resource.

In a possible implementation, the second projection resource includes at least one projectable object, and the projectable object includes any one or more of a video, an audio, a document, and a picture.

In a possible implementation, the apparatus may further include:
an object selection module, configured to receive, before the first input of the user is received, a fourth input through which the user selects the at least one projectable object.

In a possible implementation, the apparatus may further include:
a device selection module, configured to display identification information of at least one candidate receive end device before the first request is sent to the receive end device, so that a user selects the receive end device from the at least one candidate receive end device.

In a possible implementation, the apparatus may further include:
a message receiving module, configured to: receive a projection display prompt message sent by the transmit end device, and in response to the projection display prompt message, give the user a prompt that the receive end device is to display or currently displays the second projection resource.

In a possible implementation, the transmit end device is a device that supports a DLNA protocol and that is located in a same local area network as the receive end device.

In a possible implementation, the second projection resource includes a uniform resource identifier URI.

For beneficial effects of modules of the apparatus in the fourth aspect, refer to beneficial effects of corresponding steps in the projection control method in the first aspect. Details are not described herein again.

According to a fifth aspect, an embodiment of this application provides an electronic device. The electronic device may perform one or more projection control methods according to the first aspect or the plurality of possible implementations of the first aspect, or may perform one or more projection control methods according to the second aspect or the plurality of possible implementations of the second aspect.

According to a sixth aspect, an embodiment of this application provides a computer program product, including computer-readable code or a non-volatile computer-readable storage medium that carries computer-readable code. When the computer-readable code is run in an electronic device, a processor in the electronic device performs one or more projection control methods according to the first aspect or the plurality of possible implementations of the first aspect, or performs one or more projection control methods according to the second aspect or the plurality of possible implementations of the second aspect.

According to a seventh aspect, an embodiment of this application provides a volatile computer-readable storage medium. The volatile computer-readable storage medium stores computer program instructions. The computer program instructions are executed by a processor, to implement one or more projection control methods according to the first aspect or the plurality of possible implementations of the first aspect, or implement one or more projection control methods according to the second aspect or the plurality of possible implementations of the second aspect. These aspects and another aspect of this application are clearer and easier to understand in descriptions of the following (a plurality of embodiments).

### BRIEF DESCRIPTION OF DRAWINGS

The accompanying drawings included in this specification and constituting a part of this specification, together with this specification, illustrate example embodiments, features, and aspects of this application, and are used to explain the principles of this application.
FIG. 1A is a schematic diagram of a DLNA-based projection control method in the conventional technology;
FIG. 1B is a schematic diagram of time at which a receive end device performs different operations by using a DLNA-based projection control method in a conventional technology;
FIG. 2A is a schematic diagram of a projection control method according to an embodiment of this application;
FIG. 2B is a schematic diagram of time at which a receive end device performs different operations by using a projection control method according to an embodiment of this application;
FIG. 2C is a schematic flowchart of a projection control method according to an embodiment of this application;
FIG. 3A-1 and FIG. 3A-2 are a schematic flowchart of a transmit end device used in a projection control method according to an embodiment of this application;

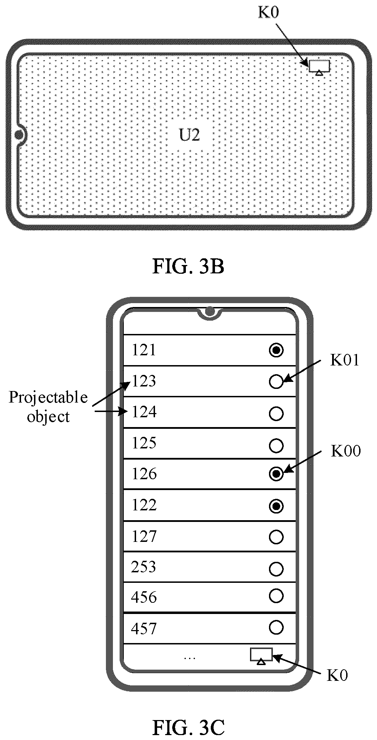

FIG. 3B is a schematic diagram in which a transmit end device displays a second projection resource according to an embodiment of this application;
FIG. 3C is a schematic diagram in which a transmit end device displays a projectable object according to an embodiment of this application;

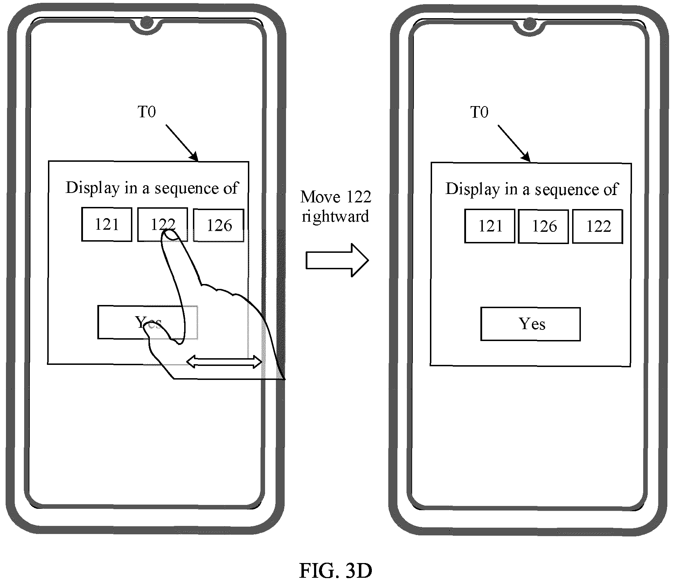

FIG. 3D is a schematic diagram in which a transmit end device displays an object sequence selection prompt according to an embodiment of this application;

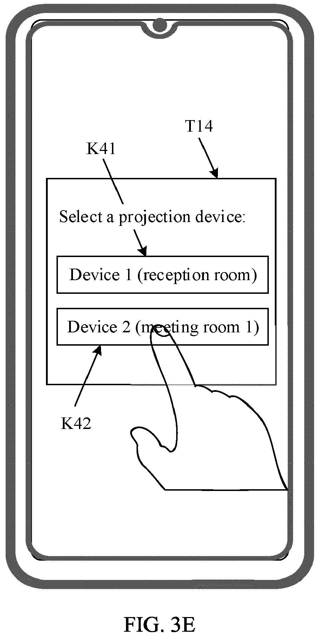

FIG. 3E is a schematic diagram of a receive end device selection prompt displayed by a transmit end device according to an embodiment of this application;

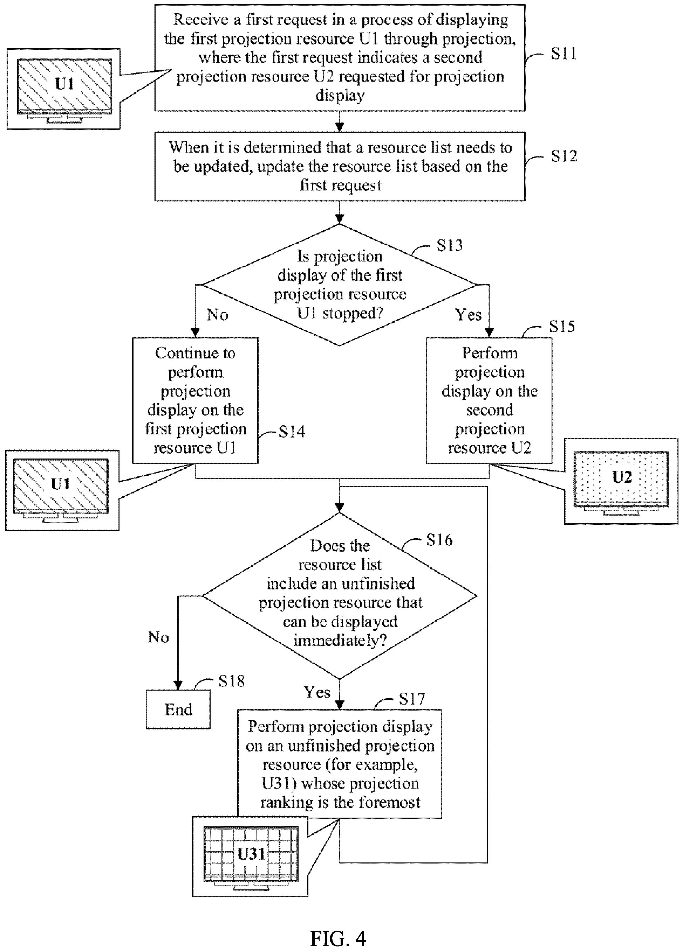

FIG. 4 is a schematic flowchart of a receive end device used in a projection control method according to an embodiment of this application;

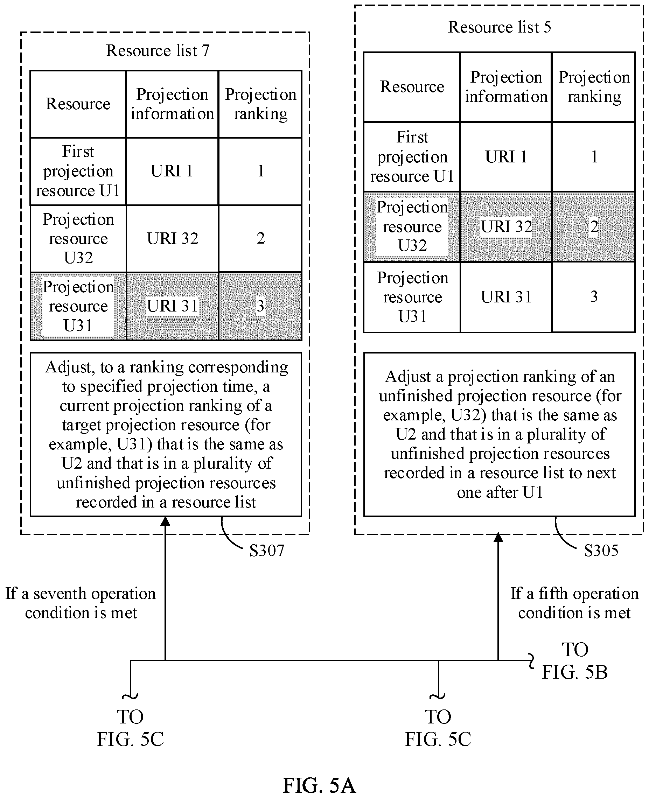

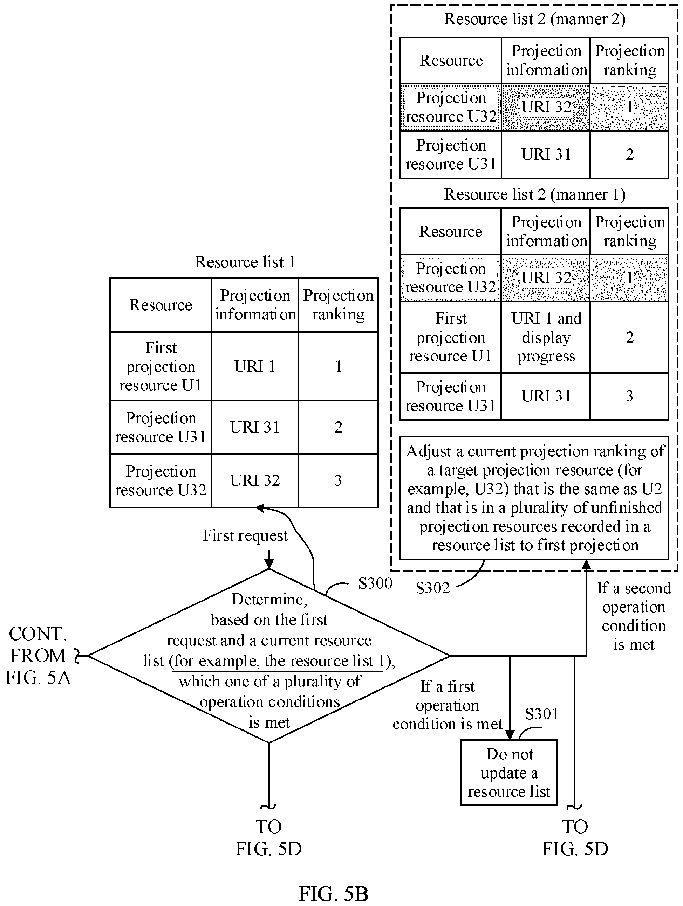

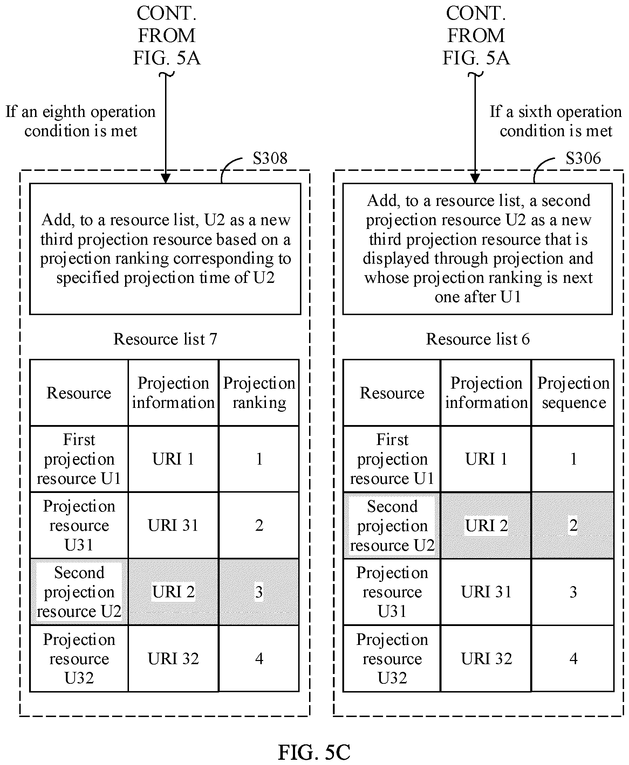

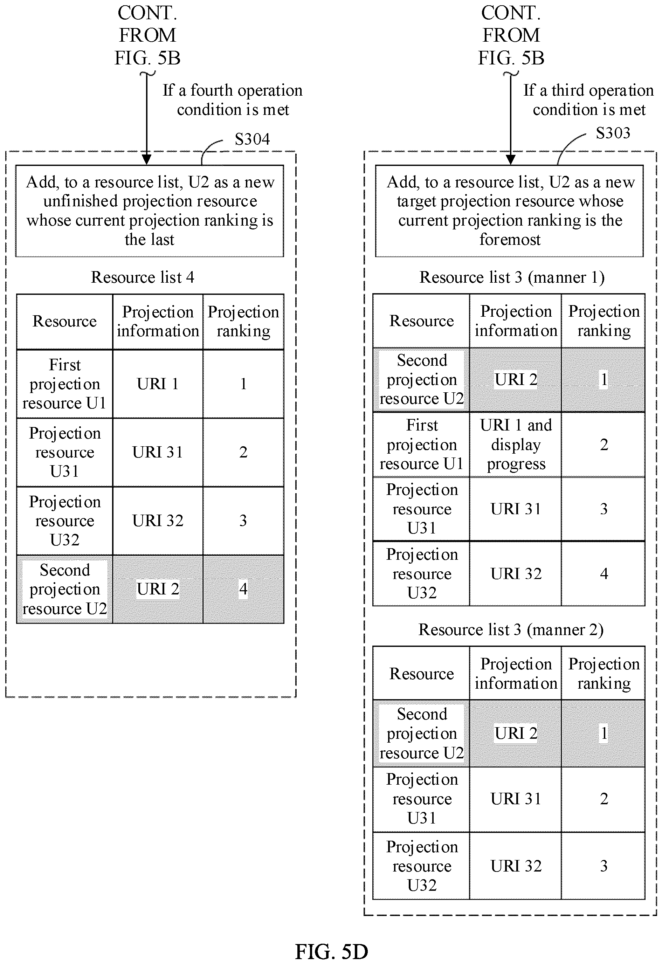

FIG. 5A, FIG. 5B, FIG. 5C, and FIG. 5D are a schematic flowchart of resource list updating in a projection control method according to an embodiment of this application;

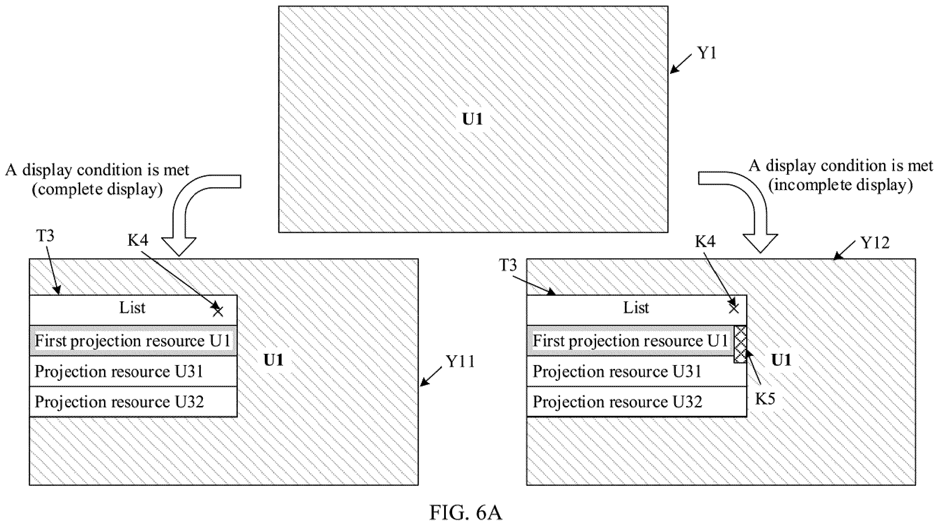

FIG. 6A to FIG. 6D are schematic diagrams in which a first interface changes according to an embodiment of this application;

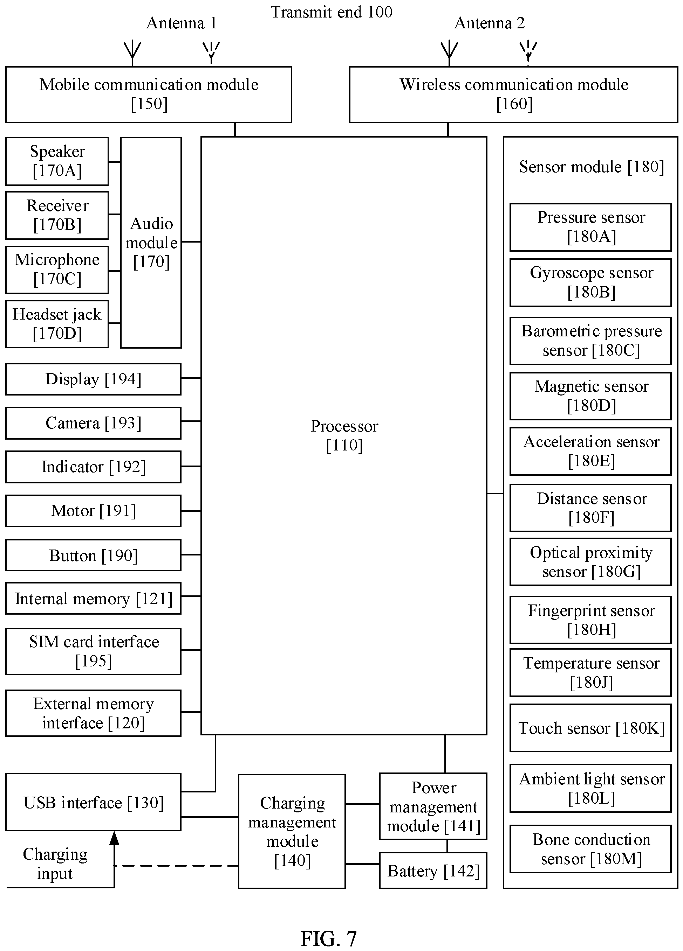

FIG. 7 is a schematic diagram of a structure of a transmit end device 100; and

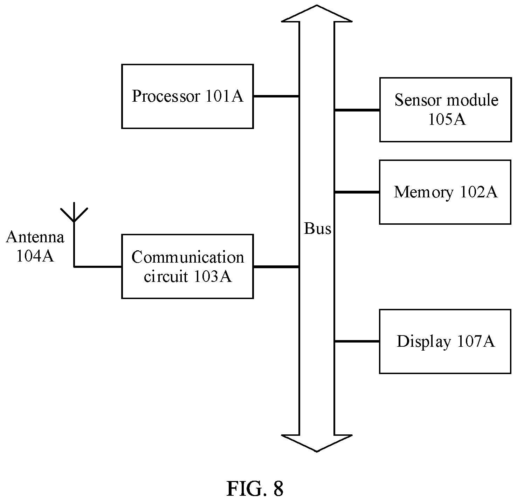

FIG. 8 is a schematic diagram of a structure of a receive end device according to an embodiment of this application.

### DESCRIPTION OF EMBODIMENTS

The following describes various example embodiments, features, and aspects of this application in detail with reference to the accompanying drawings. Identical reference signs in the accompanying drawings indicate elements that have same or similar functions. Although various aspects of embodiments are illustrated in the accompanying drawings, the accompanying drawings are not necessarily drawn in proportion unless otherwise specified.

The specific term "example" herein means "used as an example, embodiment or illustration". Any embodiment described as an "example" is not necessarily explained as being superior or better than other embodiments.

In addition, to better describe this application, numerous specific details are given in the following specific implementations. A person skilled in the art should understand that this application can also be implemented without some specific details. In some examples, methods, means, elements and circuits that are well-known to a person skilled in the art are not described in detail, so that the subject matter of this application is highlighted.

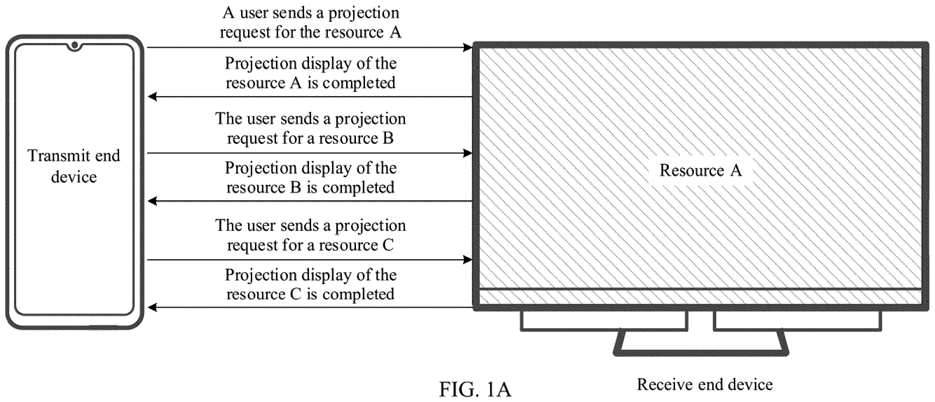

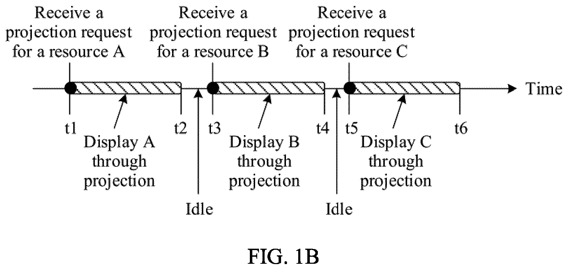

In the conventional technology, in a common DLNA-based projection scenario, both a receive end device and a transmit end device need to have a DLNA projection function, and the receive end device and the transmit end device are located in a same local area network. In a projection process, after the receive end device receives a projection request sent by a user by using the transmit end device, regardless of whether projection display of a projection resource is currently performed, the receive end device immediately responds to the received projection request, directly obtains a corresponding projection resource from a server based on a uniform resource identifier (Uniform Resource Identifier, URI) in the projection request, and then performs projection display on the projection resource corresponding to the projection request. FIG. 1A is a schematic diagram of a DLNA-based projection control method in the conventional technology. FIG. 1B is a schematic diagram of time at which a receive end device performs different operations by using a DLNA-based projection control method in the conventional technology. With reference to FIG. 1A and FIG. 1B, the following describes a problem existing in a DLNA-based projection control process in the conventional technology.

As shown in FIG. 1A and FIG. 1B, the user intends to sequentially display resources B and C through projection after the receive end device completes display of a resource A. To ensure that the resource A is displayed normally and completely, the user needs to control the transmit end device to send a projection request for the resource B to the receive end device after time t2, for example, time t3, at which the resource A is completely displayed, and control the transmit end device to send a projection request for the resource C to the receive end device after time t4, for example, time t5, at which the resource B is completely displayed. However, to ensure that t3 is after t2 and t5 is after t4, the user needs to control an occasion for sending the projection request for the resource B and the projection request for the resource C to the receive end device. This greatly limits operation time of the user, and causes poor user experience. Otherwise, if the user does not properly control time for sending the projection request, and controls the transmit end device to send the projection request for the resource B or the projection request for the resource C to the receive end device in a process in which the receive end device displays the resource A, the receive end device stops display of the resource Abased on the projection request, and performs projection display on the resource B or the resource C corresponding to the projection request. For example, as shown in FIG. 1B, if time at which the receive end device receives the projection request for the resource B or the resource C is any moment between t1 and t2, display of the resource A may be mistakenly stopped, and the user needs to perform projection again to view the stopped resource A. This brings great trouble to the user, and have complex operations. The conventional technology fails to provide a method for implementing reserved projection, in which an occasion for sending a projection request for a resource by the transmit end device no longer limited, so that the user can trigger reserved projection display on the resource on the transmit end device, and the receive end device can sequentially display resources reserved by the user for projection display.

In addition, even if the user can control the time for sending the projection request, and ensure that the user controls the transmit end device to send the projection request for the resource B to the receive end device after the time t2, for example, the time t3, at which the resource A is completely displayed, and then controls the transmit end device to send the projection request for the resource C to the receive end device after the time t4, for example, the time t5, at which the resource B is completely displayed, so that t3 is after t2 and t5 is after t4, because there is a time interval between time at which the resource A is completely displayed and time at which the resource B is to be displayed in response to the projection request for the resource B and between time at which the resource B is completely displayed and time at which the resource C is to be displayed in response to the projection request for the resource C, the receive end device is idle in a time interval between t2 and t3 and a time interval between t4 and t5. This causes resource waste of the receive end device.

To resolve the foregoing technical problem, this application provides a projection control method and an apparatus, which may be used in a receive end device, a transmit end device, and/or a system including a receive end device and a transmit end device. In the method and the apparatus, the receive end device maintains a resource list, and the resource list is used to record one or more unfinished projection resources. The unfinished projection resource includes a first projection resource that is currently displayed by the receive end device through projection and/or another projection resource that is reserved and waits for projection display. In a process of displaying the first projection resource through projection, the receive end device receives, from the transmit end device, a first request for requesting projection display of a second projection resource. Then, the receive end device determines, based on the first request, whether a request ranking is reserved projection. If the request ranking is the reserved projection and the second projection resource is different from the unfinished projection resource, the receive end device records the second projection resource in the resource list, to display the second projection resource through projection after completing projection display of an unfinished projection resource whose projection ranking is before the second projection resource in the resource list. The unfinished projection resource may include the first projection resource that is currently displayed by the receive end device through projection. Alternatively, the unfinished projection resource may include the first projection resource that is currently displayed by the receive end device through projection and another projection resource whose projection ranking is after the first projection resource.

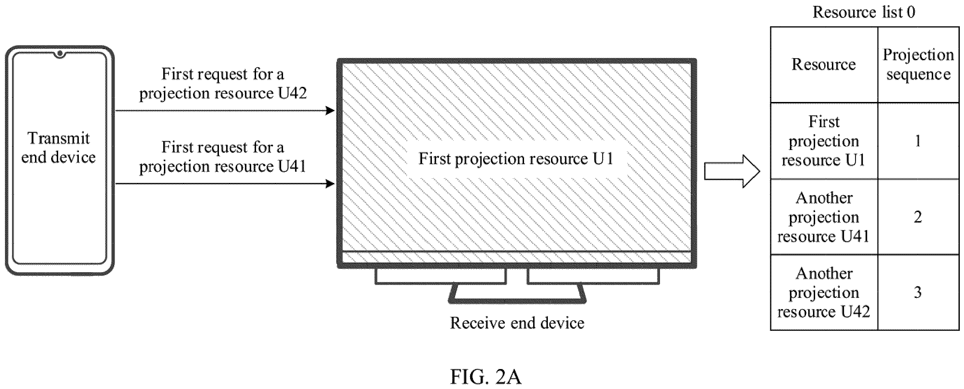

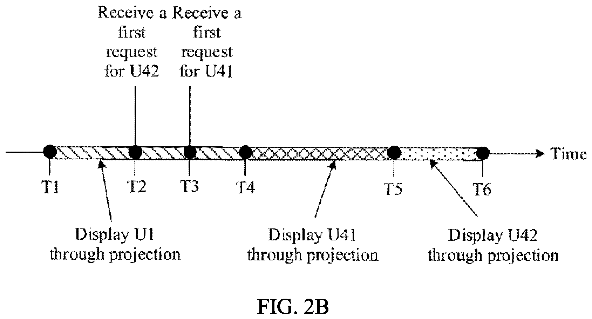

For example, FIG. 2A is a schematic diagram of a projection control method according to an embodiment of this application. FIG. 2B is a schematic diagram of time at which a receive end device performs different operations by using a projection control method according to an embodiment of this application. As shown in FIG. 2A and FIG. 2B, after the receive end device receives, in a process of displaying a first projection resource U1 through projection, a first request for a projection resource U42 at time T2 and a first request for a projection resource U41 at time T3, if the resource list is updated to a resource list 0 shown in FIG. 2A, an actual projection implementation process of the receive end device for U1, U41, and U42 is to perform projection display on U1 between T1 and T4, perform projection display on U41 between T4 and T5, and perform projection display on U42 between T5 and T6, to sequentially switch U1, U41, and U42 for projection display. In this way, in the process of displaying the first projection resource U1 through projection, a user can also operate the transmit end device to add a projection resource on which the receive end device is expected to subsequently perform projection display, to perform reserved projection, without terminating projection display of the first projection resource U1. This reduces restriction on operation occasion of the user. The reserved projection of the projection resource also ensures efficient projection of the receive end device and avoids resource waste of the receive end device.

In this embodiment of this application, the transmit end device and/or the receive end device may be at least one of a mobile phone, a foldable electronic device, a tablet computer, a desktop computer, a laptop computer, a handheld computer, a notebook computer, an ultra-mobile personal computer (ultra-mobile personal computer, UMPC), a netbook, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a television, a large-screen device, a smart home device, or a smart city device. Types of the transmit end device and the receive end device are not specially limited in embodiments of this application.

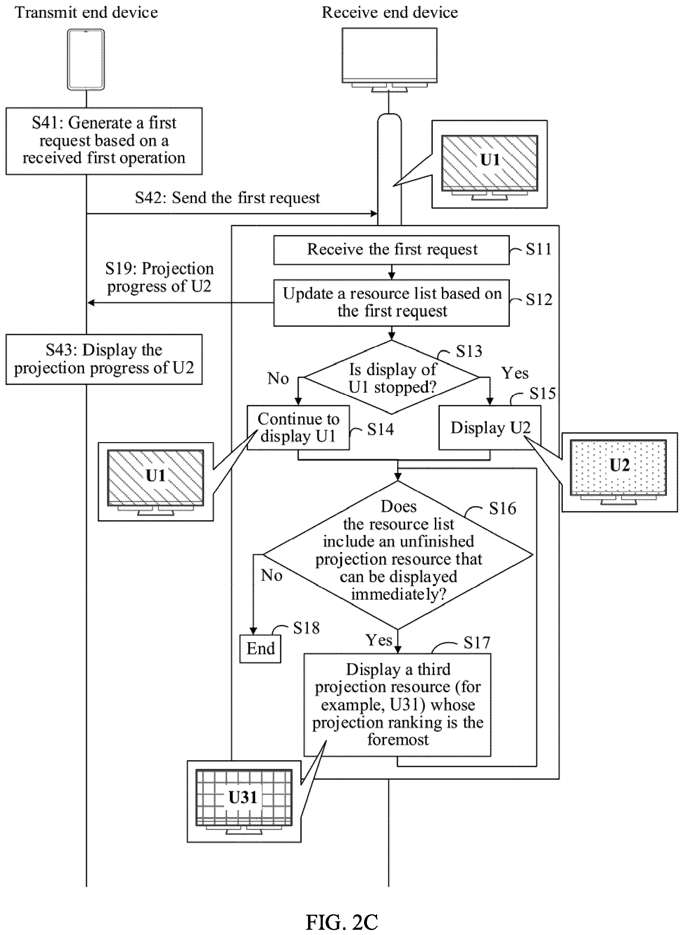

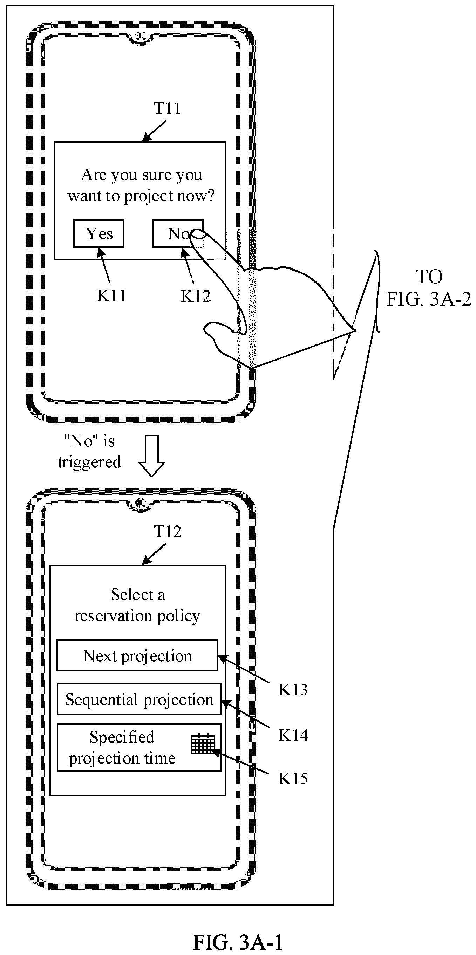

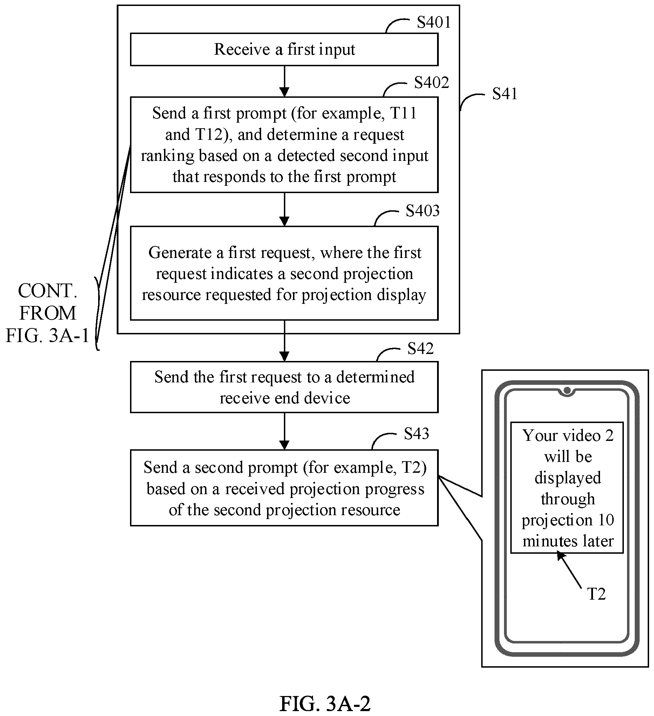

FIG. 2C is a schematic flowchart of a projection control method according to an embodiment of this application. FIG. 3A-1 and FIG. 3A-2 are a schematic flowchart of a transmit end device used in a projection control method according to an embodiment of this application. FIG. 4 is a schematic flowchart of a receive end device used in a projection control method according to an embodiment of this application. As shown in FIG. 2C and FIG. 4, in the method, steps performed by the receive end device may include step S11 to step S19. As shown in FIG. 2C and FIG. 3A-2, in the method, steps performed by the transmit end device may include step S41 to step S43. Both the transmit end device and the receive end device are located in a same local area network and support DLNA. In addition, the transmit end device and the receive end device may establish a communication connection in advance to perform communication, so as to implement projection display of a projection resource.

As shown in FIG. 2C and FIG. 3A-2, in the projection control method in this embodiment of this application, the transmit end device may perform step S41 to step S43.

Step S41: Generate a first request based on a received first operation.

In this embodiment of this application, when the transmit end device is in a state in which a user can choose whether to perform projection display on a resource, the transmit end device detects whether the user sends the first operation. Further, after receiving the first operation, the transmit end device determines, based on the first operation, a second projection resource that the user intends to display through projection, and generates the corresponding first request based on the second projection resource. Alternatively, when a request ranking of the second projection resource can be determined, the first request may be generated based on the second projection resource and the corresponding request ranking. That the transmit end device is in a state in which a user can choose whether to perform projection display on a resource may include but is not limited to one or more of the following: The transmit end device is in a state of displaying a resource to the user; the transmit end device is in a state of displaying, to the user, related information of a projectable object that may be selected for projection display; and the second projection resource may include one or more projectable objects. The projectable object may be a video, an audio, a slide, a picture, a dynamic picture, a document, and the like.

In some implementations, as shown in FIG. 3A-2, step S41 performed by the transmit end device may include step S401, step S402, and step S403.

Step S401: Receive a first input.

In step S401, when the transmit end device is in the state in which the user can choose whether to perform projection display on the resource, if the transmit end device detects the first input sent by the user for the second projection resource that may be projected, the transmit end device determines that the user intends to request projection display of the second projection resource. The first operation includes the first input.

In some embodiments, the first input may include a trigger operation that is detected by the transmit end device and that is performed by the user to trigger a projection control on a display of the transmit end device.

For example, FIG. 3B is a schematic diagram in which the transmit end device displays the second projection resource according to an embodiment of this application. As shown in FIG. 3B, when displaying a second projection resource U2 to the user, the transmit end device may display a projection control K0 to the user. When detecting that the projection control K0 is triggered, the transmit end device may determine that the first input is detected, and determine that the user intends to request projection display of the second projection resource U2.

FIG. 3C is a schematic diagram in which the transmit end device displays a projectable object according to an embodiment of this application. As shown in FIG. 3C, the transmit end device may display the projection control K0 to the user when the transmit end device displays related information of a plurality of projectable objects to the user in a list. When detecting a fourth input for at least one projectable object (the first operation may further include the fourth input), the transmit end device determines a selected projectable object. In addition, when detecting that the projection control K0 is triggered, the transmit end device determines that the first input is detected, and may use the selected projectable object as the second projection resource. In some embodiments, as shown in FIG. 3C, the transmit end device may further display, on the display, a selection status indication identifier indicating whether a corresponding projectable object is selected. A display status of the identifier includes a selected state K00 and an unselected state KO1 in FIG. 3C. As shown in FIG. 3C, when detecting that K0 is triggered, the transmit end device determines that the first input is detected. In this case, the second projection resource may include projectable objects 121, 126, and 122.

In some implementations, when the second projection resource U2 includes a plurality of projectable objects, the transmit end device may further determine a display sequence of the plurality of projectable objects in the second projection resource for projection display on the receive end device.

In some embodiments, after determining that the first operation is received, the transmit end device may send an object sequence selection prompt, to determine, based on a response of the user to the object sequence selection prompt, the display sequence of the plurality of projectable objects in the second projection resource for projection display on the receive end device. The object sequence selection prompt reminds the user to set the display sequence of the plurality of projectable objects in the second projection resource. For example, FIG. 3D is a schematic diagram in which the transmit end device displays the object sequence selection prompt according to an embodiment of this application. As shown in FIG. 3D, after determining that the first input is received, the transmit end device may display the object sequence selection prompt T0 to the user on the display of the transmit end device. In some embodiments, the transmit end device may determine a to-be-selected display sequence corresponding to the plurality of projectable objects in the second projection resource based on an object identifier like a name (121, 122, 123, and 124 in FIG. 3C and FIG. 3D) of each projectable object in the second projection resource, corresponding time information, and sequence influence information such as a sequence in which the user selects a projectable object on an interface shown in FIG. 3C, and display, in the object sequence selection prompt T0, the to-be-selected display sequence of the projectable object to the user. As shown in FIG. 3D, content displayed to the user in T0 includes a text prompt "Display in a sequence of 121, 122, and 126?" and a control "Yes" that can be operated by the user to determine a display sequence. 121, 122, and 126 may be controls that can be configured to adjust a sequence in response to a movement operation of the user, and a current display sequence of projectable objects 121, 122, and 126 is 121, 122, and 126. When it is detected that, as shown in FIG. 3D, the user selects "122" by using a finger or the like and moves "122" rightward, a sequence of display between 126 and 122 may be changed. In other words, the user adjusts a display sequence from an original sequence "121, 122, 126" to a sequence "121, 126, 122". If the transmit end device detects, in a process of displaying T0 to the user, that the control "Yes" is triggered, the transmit end device may determine a current sequence of the plurality of projectable objects in T0 as the display sequence.

In some embodiments, the first input may alternatively be a voice indication sent by the user and detected by the transmit end device. For example, as shown in FIG. 3B, if the transmit end device detects, in a process of displaying the second projection resource U2 to the user, a voice sent by the user, and identifies that the voice includes words such as "Projection" and "I want to project", the transmit end device may also determine that the first input is detected and the user intends to request projection display of the second projection resource U2.

In some embodiments, the first input may alternatively be a trigger operation that is detected by the transmit end device and that is performed by the user to trigger an entity control disposed on the transmit end device and configured to send the first request. For example, as shown in FIG. 3B, if the transmit end device detects, in the process of displaying the second projection resource U2 to the user, that the user triggers the entity control for sending the first request, the transmit end device may also determine that the first input is detected and the user intends to request projection display of the second projection resource U2. The entity control may be an entity button that actually exists in the transmit end device and that is implemented by using actual physical hardware. The entity button is similar to a power button, a volume button, and the like of a mobile phone.

In some embodiments, in step S401, if the transmit end device receives an instruction sent by another device, and the instruction is used to trigger the transmit end device to send the first request to the receive end device, the transmit end device may also determine that the first input is received. The another device described herein may be, for example, a remote control paired with the transmit end device.

In a possible implementation, after determining that the user intends to request projection display of the second projection resource U2 (which may include one or more projectable objects), the transmit end device may first determine whether the user presets a default request ranking. If the user does not preset a default request ranking, step S402 may be performed. If the user presets the default request ranking, the transmit end device may directly determine, based on the preset default request ranking, a request ranking of the second projection resource U2 that is requested for projection display.

In some embodiments, the default request ranking may include a unified first default request ranking corresponding to all second projection resources. Therefore, after determining the second projection resource U2 that the user intends to request for projection display, the transmit end device may directly set the request ranking as the first default request ranking. For example, the transmit end device may set, based on user settings, the first default request ranking to be any one of optional request rankings such as sequential projection, immediate projection, and next projection.

In some embodiments, because the first request may be sent by the user by using different applications of the transmit end device, the default request ranking may further include a second default request ranking corresponding to the different applications. The second default request ranking corresponding to the different applications may be the same or may be different. When the transmit end device determines that the user intends to request, by using an application, projection display of the second projection resource, the transmit end device may directly set the request ranking of the second projection resource as a second default request ranking corresponding to the application.

In some embodiments, the default request ranking may further include a third default request ranking corresponding to different types of second projection resources. The third default projection request ranking corresponding to different types of second projection resources may be different. For example, based on user settings, the transmit end device may set a third default request ranking corresponding to a second projection resource of a video type to be the sequential projection, set a third default request ranking corresponding to a second projection resource of a picture type to be the immediate projection, and set a third default request ranking corresponding to a second projection resource of a slide type to be the next projection, and the like.

In some embodiments, when the second projection resource includes one projectable object or includes a plurality of projectable objects of a same type, the transmit end device may directly determine a type of the projectable object as a type of the second projection resource. For example, if all projectable objects included in the second projection resource are videos, the type of the second projection resource is a video. When the second projection resource includes a plurality of projectable objects, and types of the plurality of projectable objects are inconsistent, the transmit end device may first determine a type of each projectable object, and then determine a type of the second projection resource according to a preset rule. The preset rule may include determining, as the type of the second projection resource, a type corresponding to a largest quantity of projectable objects in a plurality of determined types. For example, it is assumed that the second projection resource includes five projectable objects, which are respectively three videos, one document, and one picture. Because a largest quantity of projectable objects belong to a video type, the transmit end device may set the type of the second projection resource to be the video. The preset rule may further include determining, as the type of the second projection resource, a type with a highest type priority determined from the plurality of projectable objects. A sequence of type priorities may be set based on actual requirements. For example, the type priorities may be a video, an audio, a slide, a picture, a motion picture, and a document in descending order. For example, the second projection resource includes five projectable objects, which are respectively two documents, one picture, and two audios. Because the audio type has the highest type priority, the transmit end device may set the type of the second projection resource to the audio. It may be understood that a person skilled in the art may set the preset rule based on actual requirements. This is not limited in this application.

It should be noted that the default request ranking is merely a schematic example of the set default request ranking provided in this embodiment of this application. A person skilled in the art may set a manner and content of the set default request ranking as required. This is not limited in this application.

In some embodiments, the request ranking may include the immediate projection and reserved projection. The immediate projection may mean that the user requests the receive end device to immediately perform, after receiving the first request, projection display on the second projection resource indicated by the first request. The reserved projection may include a projection ranking with different reservation policies, for example, the sequential projection, the next projection, and specified reserved projection. The sequential projection may mean that the user requests the receive end device to sequentially perform, after receiving the first request, projection based on a projection ranking of the second projection resource indicated by the first request in a resource list of the receive end device. The next projection may mean that the user requests the receive end device to immediately perform, after receiving the first request in a process of displaying the first projection resource through projection, and completing projection display of the first projection resource, projection display on the second projection resource indicated by the first request. The specified reserved projection may mean that the user requests the receive end device to perform, after receiving the first request and determining that specified projection time specified by the user elapses, projection display on the second projection resource.

Step S402: Send a first prompt, and determine the request ranking based on a detected second input in response to the first prompt. This step is optional.

In step S402, the transmit end device may send the first prompt, where the first prompt reminds the user to determine or select the request ranking of the second projection resource. Then, the transmit end device may determine the request ranking of the second projection resource based on a detected operation performed by the user in response to the first prompt, where the second input may include the operation performed by the user in response to the first prompt.

In a possible implementation, the first prompt sent by the transmit end device may include displaying, on the display of the transmit end device, a prompt T11 indicating whether to perform reserved projection shown in FIG. 3A-1, to the user. The operation performed by the user in response to the first prompt may include an operation that is detected by the transmit end device and that is performed by the user in response to the prompt T11 indicating whether to perform reserved projection. The prompt T11 indicating whether to perform reserved projection may be displayed in a pop-up window newly added on the display, or may be displayed in a notification bar of the transmit end device, or the like. The prompt T11 indicating whether to perform reserved projection may include a text used to give the user a prompt of selecting the request ranking, for example, "Are you sure you want to project now?" (as shown in FIG. 3A-1), "Are you sure you want to project now?", or "Are you sure you want to perform reserved projection". The prompt T11 indicating whether to perform reserved projection may further include a control that can be operated by the user to select whether to perform immediate projection or reserved projection. For example, in FIG. 3A-1, the prompt T11 indicating whether to perform reserved projection includes a text "Are you sure you want to project now?" and a first control K11 and a second control K12 for selecting the request ranking.

In some embodiments, "the operation performed by the user in response to the prompt T11 indicating whether to perform reserved projection" may include a trigger operation performed by the user on the first control K11 or the second control K12 displayed in the prompt T11 indicating whether to perform reserved projection. In some embodiments, the first control K11 and the second control K12 may be respectively marked with words such as "Yes" and "No", and "Now" and "Reserved" shown in FIG. 3A-1, to enable the user to distinguish between the first control K11 and the second control K12, so as to achieve prompting and distinguishing functions. After the transmit end device displays the prompt T11 indicating whether to perform reserved projection, if a text in the prompt T11 is asking the user whether to select the immediate projection, for example, "Are you sure you want to project now?", and the transmit end device detects a trigger operation such as tap, or touch and hold that is sent by the user on the first control K11, it may be determined that the user determines the request ranking of the second projection resource as the immediate projection; or if the transmit end device detects a trigger operation such as tap, or touch and hold that is sent by the user on the second control K12, it may be determined that the user determines the request ranking of the second projection resource as the reserved projection. On the contrary, after the transmit end device displays the prompt T11 indicating whether to perform reserved projection, if a text in the prompt T11 is asking the user whether to select the reserved projection, for example, "Do you want to perform reserved projection?", and the transmit end device detects that the first control K11 is triggered, it may be determined that the user determines the request ranking of the second projection resource as the reserved projection; or if the transmit end device detects that the second control K12 is triggered, it may be determined that the user determines the request ranking of the second projection resource as the reserved projection.

In some embodiments, "the operation performed by the user in response to the prompt T11 indicating whether to perform reserved projection" may further include a voice that is detected by the transmit end device and that is sent by the user in response to the prompt T11 indicating whether to perform reserved projection. After displaying the prompt T11 indicating whether to perform reserved projection to the user, the transmit end device may collect a voice signal to obtain the voice sent by the user, and then analyze and process the voice sent by the user to determine the request ranking of the second projection resource indicated by the user by using the voice. For example, after displaying the prompt T11 indicating whether to perform reserved projection to the user, the transmit end device analyzes and processes a collected voice 1 of the user and determines that a text corresponding to the voice 1 is content, such as "Immediate projection", or "Immediate", corresponding to the immediate projection. In this case, it may be determined that the user determines the request ranking of the second projection resource as the immediate projection. After displaying the prompt T11 indicating whether to perform reserved projection to the user, the transmit end device analyzes and processes a collected voice 2 of the user and determines that a text corresponding to the voice 2 is content, such as "Reserved projection", or "Reserved", corresponding to the reserved projection. In this case, it may be determined that the user determines the request ranking of the second projection resource as the reserved projection.

In a possible implementation, the first prompt sent by the transmit end device may further include a reservation policy prompt that continues to be displayed by the transmit end device on the display after the request ranking of the second projection resource is determined as the reserved projection. The operation performed by the user in response to the first prompt may further include "an operation performed by the user in response to the reservation policy prompt" detected by the transmit end device. The reservation policy prompt may include words that remind the user to select a reservation policy, for example, "Select a reservation policy (as shown in FIG. 3A-1)" or "Which of the following manners do you need to perform reserved projection?" The reservation policy prompt may further include controls that can be operated by the user and that are configured to select different reservation policies. For example, as shown in FIG. 3A-1, when it is determined that the user selects the reserved projection, the transmit end device may display a reservation policy prompt T12 on the display of the transmit end device to the user. T12 includes words "Select a reservation policy", a control K13 for determining the request ranking as the next projection, a control K14 for determining the request ranking as the sequential projection, and a control K15 for determining the request ranking as the specified reserved projection.

In some embodiments, "the operation performed by the user in response to the reservation policy prompt" may include third inputs performed by the user for the control K13, the control K14, and the control K15.

After the transmit end device displays the reservation policy prompt T12, if the transmit end device detects the third input such as a tap or touch and hold that is sent by the user for the control K13, the request ranking of the second projection resource may be determined as the next projection in the reserved projection. The next projection may mean that the user requests the receive end device to immediately perform projection display on the second projection resource after completing display of the first projection resource that is currently displayed, to implement "queue-jumping" display of the second projection resource. For example, it is assumed that the receive end device currently displays a video 1 (the first projection resource). If the second projection resource indicated by the first request received by the receive end device is a video 2 and the request ranking is the next projection, the receive end device may directly perform projection display on the video 2 after completing projection display of the video 1.

After the transmit end device displays the reservation policy prompt T12, if the transmit end device detects the third input such as a tap or touch and hold that is sent by the user for the control K14, the request ranking of the second projection resource may be determined as the sequential projection in the reserved projection. The sequential projection may mean that the user requests the receive end device to display the second projection resource after completing projection display of an unfinished projection resource in a current resource list. In other words, if the receive end device receives the first request whose request ranking is the sequential projection, the receive end device may determine that the user requests to arrange the projection ranking of the second projection resource at a "queue tail" of all unfinished projection resources in the current resource list. In this case, the server performs projection display on the second projection resource after sequentially completing projection display of all unfinished projection resources recorded in the resource list before the server receives the first request. For example, it is assumed that there are three unfinished projection resources in the current resource list at time t11 at which a receive end device receives the first request. The request ranking of the second projection resource indicated by the first request is the sequential projection. In this case, the receive end device may perform projection display on the second projection resource after sequentially completing projection display of the three unfinished projection resources recorded in the resource list before the time t11.

After the transmit end device displays the reservation policy prompt T12, if the transmit end device detects the third input such as a tap or touch and hold that is sent by the user for the control K15, the transmit end device may further display, to the user in a form of, for example, a pop-up window, a time selection bar that allows the user to select specified projection time, and determine the specified projection time based on a detected operation performed by the user on the time selection bar. Then the request ranking of the second projection resource may be determined as the specified reserved projection in the reserved projection based on the specified projection time selected by the user. For example, if the transmit end device determines, based on the operation performed by the user on the time selection bar, that the specified projection time is "15:00 on August 29, 2021", the transmit end device may determine, based on the specified projection time "15:00 on August 29, 2021", that time at which the second projection resource U2 starts to be displayed on the receive end device is 15:00 on August 29, 2021. For another example, if the transmit end device determines, based on the operation of the user on the time selection bar, that the specified projection time is "10 minutes later", the transmit end device may determine, based on the specified projection time "10 minutes later" and current time (it is assumed that the current time is 14:50 on August 29, 2021), that time at which the second projection resource U2 starts to be displayed on the receive end device is 15:00 on August 29, 2021 (the current time August 29, 2021 14:50 plus 10 minutes).

In some embodiments, "an operation performed by the user in response to the reservation policy prompt T12" may include a voice that is detected by the transmit end device and that is sent by the user in response to the reservation policy prompt T12. After displaying the reservation policy prompt T12 to the user, the transmit end device may collect a voice signal to obtain the voice sent by the user, and then analyze and process the voice sent by the user, to determine a projection mode to which the request ranking of the second projection resource indicated by the user by using the voice belongs in the reserved projection. An implementation of determining, by using the voice, a projection mode, to which the request ranking of the second projection resource belongs in the reserved projection is similar to the foregoing implementation of determining, by using the voice, whether the request ranking selected by the user is the immediate projection. Details are not described herein again.

In a possible implementation, the first prompt sent by the transmit end device may further include a first prompt voice sent by the transmit end device. The operation performed by the user in response to the first prompt may include: After sending the first prompt voice, the transmit end device collects a voice signal, to obtain the voice sent by the user, and then analyzes and processes the voice sent by the user, to determine the request ranking of the second projection resource indicated by the user by using the voice. In some embodiments, the transmit end device may first send a first voice that reminds the user to select whether to determine the request ranking of the second projection resource as the immediate projection, for example, "Are you sure you want to project now?", and may determine, based on a detected first response voice sent by the user in response to the first voice, whether the user selects the immediate projection, for example, may determine, according to whether a recognized text corresponding to the first response voice includes words indicating selection of the immediate projection, such as "Immediate", "Immediate projection", or "Yes", whether the user selects the immediate projection. If the user selects the immediate projection, the user directly determines the request ranking of U2 as the immediate projection. If the user chooses not to immediately perform projection, the transmit end device may determine that the user selects the reserved projection, and may further send a second voice such as "Do you want next projection, sequential projection, or specified reserved projection?" Then, the transmit end device determines, based on a detected second response voice sent by the user in response to the second voice, that the user may directly determine the request ranking of the second projection resource as the next projection or the sequential projection if the user selects the next projection or the sequential projection (for example, it may be determined that the user selects the next projection when a recognized text corresponding to the second response voice includes a similar word such as "Next"). If a text recognized based on the second response voice includes specific time information, for example, "one hour later", "nine o'clock tomorrow", or "10 o'clock on October 10", the specified projection time selected by the user may be determined, and the request ranking of the second projection resource may be determined as the specified reserved projection in the reserved projection. If a text recognized by the transmit end device based on the second response voice includes information corresponding to the specified reserved projection, such as "time" or "reservation time", and does not include specific time information, the transmit end device may further send a third voice, for example, "Determine specific projection time", to remind the user, by using the third voice, to input the specified projection time. Then, the transmit end device may determine, based on a detected voice sent by the user in response to the third voice, the specified projection time selected by the user, and determine the request ranking of the second projection resource as the specified reserved projection in the reserved projection.

In some embodiments, the first prompt sent by the transmit end device may include the first prompt voice and/or "the prompt T11 indicating whether to perform reserved projection and the reservation policy prompt T12". This is not limited in this application.

In a possible implementation, if the transmit end device does not store a preset default request ranking, and does not receive the second input of the user in response to the first prompt after the transmit end device sends the first prompt, the immediate projection, the next projection, or the sequential projection may be used as the request ranking of the second projection resource; or a request ranking corresponding to a projection resource requested by the user last time for projection display may be used as a request ranking of a current second projection resource; or the user does not need to set the request ranking of the second projection resource by default. This is not limited in this application.

It should be understood that, in the foregoing, sending the first prompt by displaying "the prompt T11 indicating whether to perform reserved projection and the reservation policy prompt T12" and/or sending the first prompt by giving the first prompt voice is merely an example implementation of "sending the first prompt" by the transmit end device provided in this application. A person skilled in the art may set an implementation of "sending the first prompt" of the transmit end device based on actual requirements. This is not limited in this application.

In some embodiments, before sending the first request, the transmit end device may determine a receive end device for receiving the first request to perform projection display on the second projection resource. For example, before, after, or at a moment at which a second projection resource requested by the user for projection display is determined, the transmit end device may determine a receive end device selected by the user to perform projection display on the second projection resource. Before, after, or at a moment at which the request ranking of the second projection resource is determined, the transmit end device may determine a receive end device selected by the user to perform projection display on the second projection resource U2.

In some embodiments, a manner in which the transmit end device determines the receive end device selected by the user to perform projection display on the second projection resource may include: When determining at least one candidate receive end device that has established a connection to the transmit end device and that can perform projection display on the second projection resource in response to the first request of the transmit end device, the transmit end device may send a receive end device selection prompt, and then determines, based on a detected operation performed by the user in response to the receive end device selection prompt, a selected candidate receive end device as the receive end device receiving the first request. The receive end device selection prompt may be sent, for example, through a display and/or a voice. For example, FIG. 3E is a schematic diagram of a receive end device selection prompt displayed by a transmit end device according to an embodiment of this application. As shown in FIG. 3E, the transmit end device determines that candidate receive end devices that are currently located in a same local area network and support DLNA projection include a device 1 and a device 2. In this case, a receive end device selection prompt T 14 shown in FIG. 3E may be displayed on the display of the transmit end device. The receive end device selection prompt T14 may include a text prompt for reminding the user to select a receive end device, for example, "Select a projection device" and "Which of the following devices do you want to use for projection?" in FIG. 3E. The receive end device selection prompt T14 may further include related identification information such as an identifier, a name, and a location of a candidate receive end device that can be selected, and a control that can be used by the user to select a corresponding candidate receive end device, so that the user selects, from candidate receive end devices, a candidate receive end device that the user intends to serve as the receive end device. For example, the receive end device selection prompt T14 in FIG. 3E displays controls K41 and K42 that can be used by the user to select a candidate receive end device. In addition, in the control K41 and the control K42, a name and a location of a candidate receive end device corresponding to the control are respectively described by using words "Device 1 (reception room)" and "Device 2 (meeting room 1)". If detecting that the control K41 is triggered, the transmit end device may determine that the user selects the device 1 in the candidate receive end devices as the receive end device, and the transmit end device may send the first request to the device 1 in step S42.

In some embodiments, the user may alternatively select a plurality of candidate receive end devices as receive end devices. For example, in a scenario such as training, to ensure that training participants in different rooms can view a training video synchronously, the user may select a plurality of devices in a plurality of rooms as receive end devices that request to display the training video through projection.

In some embodiments, the transmit end device may alternatively not send a receive end device selection prompt. Instead, all devices that are in a same local area network and support DLNA projection are used as receive end devices by default, to implement a "one-to-many" effect.

In some embodiments, if the transmit end device displays the receive end device selection prompt and the first prompt on the display, the transmit end device may simultaneously display the receive end device selection prompt and the first prompt on the display, to simplify an operation of the user, and improve a speed of determining the request ranking of the second projection resource and determining the receive end device selected by the user to perform projection display on the second projection resource.

Step S403: Generate the first request.

Step S403 may be performed after step S402, where the transmit end device generates the first request based on the determined request ranking and determined projection information of the second projection resource, where the first request indicates the second projection resource requested for projection display. Alternatively, if the request ranking of the second projection resource is not determined, the first request may be directly generated based on the determined projection information of the second projection resource. In some embodiments, when the second projection resource includes a plurality of projectable objects, a basis for generating the first request further includes a display ranking corresponding to each projectable object in the second projection resource.

In some embodiments, the projection information may be information that can indicate the second projection resource and that enables the receive end device to obtain the second projection resource and perform projection display based on the projection information. For example, the projection information may include a uniform resource identifier (Uniform Resource Identifier, URI) of the second projection resource, namely, a URI of each projectable object in the second projection resource. In some embodiments, when this embodiment of this application is applied to a DLNA protocol-based projection scenario, the first request may carry the URI of the second projection resource. Therefore, the receive end device may obtain the URI of the second projection resource from the received first request, and then the receive end device may obtain, from the server, a resource corresponding to the URI, that is, obtain the second projection resource.

Step S42: Send the first request to the determined receive end device.

In some embodiments, after generating the first request, the transmit end device sends the first request to the determined receive end device (namely, a receive end device that performs step S11 to step S19 in this embodiment of this application) that is used to perform projection display on the second projection resource, so that the receive end device performs a corresponding operation after receiving the first request.

Step S43: Send a second prompt based on a received projection progress of the second projection resource. This step is optional.

In some embodiments, the transmit end device receives the projection progress that is of the second projection resource and that is sent by the receive end device, and sends the second prompt to the user based on the received projection progress. The second prompt may remind the user of the projection progress of the second projection resource requested by the user for projection display.

In some embodiments, the projection progress of the second projection resource may include a time interval between a current moment and a start moment at which the receive end device starts projection display on the second projection resource, a start moment and an end moment at which the receive end device displays the second projection resource through projection, projection duration that needs to be taken when the receive end device displays the second projection resource through projection, a projection resource that further needs to be displayed before the receive end device displays the second projection resource through projection, and the like.

In some embodiments, a manner of sending the second prompt by the transmit end device may include: displaying, on the display, a second prompt T2 shown in FIG. 3A-1 to the user, and/or sending a second prompt voice. For example, the second prompt T2 may include a text prompt related to a projection progress of the second projection resource U2 that is requested by the user for projection. The second prompt voice may be a voice related to the projection progress of the second projection resource U2 that is requested by the user for projection. In this way, the user who requests to display the second projection resource U2 through projection can be reminded to make a plan, to ensure that the second projection resource U2 displayed by the receive end device through projection can be viewed on time.

For example, it is assumed that a moment at which the receive end device receives the first request is 14:10. In this case, the receive end device currently displays a first projection resource U1, and the first projection resource U1 is a video 1 whose projection duration is 30 minutes. The receive end device currently plays the video 1 at the 20^{th} minute. It takes 10 minutes to completely play the video 1. It is assumed that the first request carries a URI of the second projection resource U2, and the second projection resource is a video 2 whose projection duration is 60 minutes. In this case, the receive end device may obtain, through calculation, the projection progress of the second projection resource U2 based on the foregoing information, and send the projection progress to the transmit end device, so that the transmit end device may send the second prompt. For example, the second prompt T2 may include one or more of the following: "Your video 2 will be displayed through projection 10 minutes later" (as shown in FIG. 3A-1 and FIG. 3A-2), "The receive end device will start to play the video 2 at 14:20", "The receive end device will play the video 2 after playing the video 1", "The receive end device will end playing of the video 2 at 15:20", "It takes 60 minutes for the receive end device to play the video 2", and the like.

In some embodiments, the receive end device may alternatively not send the projection progress of the second projection resource U2 to the transmit end device, but send, to the transmit end device, information (for example, projection duration of the first projection resource U1 and a current projection display progress) related to a projection progress of the first projection resource U1 currently displayed through projection, information (for example, projection duration of each unfinished projection resource) about each unfinished projection resource in the resource list. The transmit end device may obtain, through calculation, the projection progress of the second projection resource U2 based on the information.

As shown in FIG. 2C and FIG. 4, in the projection control method provided in this embodiment of this application, the receive end device may perform step S11 to step S19.

Step S11: Receive the first request from the transmit end device in a process of displaying the first projection resource U1 through projection, where the first request indicates the second projection resource U2 requested for projection display.

In some embodiments, when this embodiment of this application is applied to a DLNA protocol-based projection scenario, the first request may carry the URI of the second projection resource U2. In this way, the receive end device can obtain, from the server based on the URI of the second projection resource U2, a resource corresponding to the URI, namely, the second projection resource.

In some embodiments, the transmit end device may include one or more terminal devices. The one or more terminal devices each can send the first request to the receive end device. Correspondingly, the receive end device can receive the first request from the one or more terminal devices. For example, it is assumed that a first terminal sends a first request indicating to request projection display of the first projection resource U1 to the receive end device, and a second terminal sends the first request indicating to request projection display of the second projection resource U2 to the receive end device. In this case, the first terminal and the second terminal may be a same terminal device, or may be different terminal devices. A quantity of transmit end devices is not limited in embodiments of this application.

In some embodiments, the receive end device stores the resource list, and the resource list may include one or more projection resource records. Each projection resource record is used to record projection display-related information of an unfinished projection resource whose projection display is not completed. The projection display-related information may include a projection ranking and projection information. The projection ranking may indicate a sequence in which a corresponding unfinished projection resource is displayed through projection in all unfinished projection resources in the resource list. The projection ranking may be determined based on a request ranking indicated by a corresponding first request and the like. The projection information may be information that can indicate which projection resource is an unfinished projection resource and enables the receive end device to obtain the unfinished projection resource and perform projection display based on projection information. In a DLNA protocol projection scenario, the projection information may be a URI corresponding to the unfinished projection resource.

In some embodiments, an identifier indicating a projection ranking may be used to mark a projection ranking of a corresponding unfinished projection resource in the resource list. The identifier may be information such as a number or an English letter that can reflect a sequence. For example, as shown in FIG. 5A, FIG. 5B, FIG. 5C, and FIG. 5D, a projection ranking of each unfinished projection resource is marked in the resource list by using Arabic numerals such as "1", "2", "3", and "4". In this case, an identification number of the projection ranking of the unfinished projection resource may be set as follows: A smaller value corresponds to a higher projection ranking. A resource list 1 is used as an example. Unfinished projection resources recorded in the resource list 1 include a first projection resource U1, a projection resource U31, and a projection resource U32. It can be learned from identifiers "1", "2", and "3" that projection rankings of the three unfinished projection resources are successively the first projection resource U1, the projection resource U31, and the projection resource U32 from early to late.

In some embodiments, when an implementation of the resource list is a list, the projection ranking of each unfinished projection resource may be represented by a sequence of a corresponding projection resource record in the list. It may be set that a projection ranking of an unfinished projection resource indicated by a projection resource record sorted first in the list is in the first place, and a projection ranking of an unfinished projection resource indicated by a projection resource record sorted later in the list is in the second place. The receive end device may perform projection display on corresponding unfinished projection resources from early to late based on a sequence of projection resource records in the list.

In some embodiments, when an implementation of the resource list is a queue, the projection ranking of each unfinished projection resource may be represented by a queuing sequence of a projection resource record in the queue. A projection ranking of an unfinished projection resource corresponding to a projection resource record in the head of the queue is the first, and a projection ranking of an unfinished projection resource corresponding to a projection resource record in the tail of the queue is the last. The projection ranking of the unfinished projection resource is consistent with the queuing sequence of the corresponding projection resource record in the queue. The receive end device may perform projection display on corresponding unfinished projection resources from the header to the tail in the sequence of the projection resource records in the queue.

It should be understood that a person skilled in the art may set an implementation of the resource list based on actual requirements. This is not limited in embodiments of this application.

In some embodiments, after the receive end device is started and starts to work, if it is detected that the receive end device does not store the resource list locally, the receive end device may first establish an empty resource list, and then continuously update the resource list based on the received first requests sent by a same transmit end device and/or different transmit end devices. Alternatively, after the receive end device is started and starts to work, if it is detected that the receive end device does not have a resource list, the receive end device may establish a resource list after receiving the first request from the transmit end device for the first time. The new resource list records a projection resource record of the second projection resource indicated by the first request.

In some embodiments, before being powered off, the receive end device may delete the resource list or clear the resource list. This can reduce storage space occupied by the resource list on the receive end device.

In some embodiments, before being powered off, the receive end device may delete a projection resource record that meets a deletion condition and that is the resource list. However, because the projection resource record in the resource list is deleted each time before the receive end device is powered off, it can be ensured that, each time after the receive end device is started, the receive end device does not continue to display some projection resources that exceed a projection display time limit. In some embodiments, a projection resource record that does not meet the deletion condition may include: a projection resource record that is in all the unfinished projection resources and whose specified projection time is after a current moment. In this way, it can be ensured that, an unfinished projection resource that is in the unfinished projection resources recorded in the resource list and that is reserved by the user for projection display at specified projection time may be always recorded in the resource list of the receive end device. After starting to work again, the receive end device may continue to perform projection display on a corresponding unfinished projection resource at the specified projection time. For example, it is assumed that the current moment is 18:13 on September 1, 2021, and the receive end device intends to perform a power-off operation according to a user instruction. Before the receive end device is powered off, if the receive end device detects that an unfinished projection resource corresponding to a projection resource record in the resource list is a video 4, and specified projection time of the video 4 is 16:00 on September 2, 2021, the receive end device may retain the projection resource record of the video 4 in the resource list, so that the receive end device can perform projection display on the video 4 on time at 16:00 on September 2, 2021 when the receive end device is in an on state at 16:00 on September 2, 2021.

In some embodiments, before the receive end device is powered off, if the receive end device detects that the resource list is not empty, the receive end device may send a resource list processing prompt, where the resource list processing prompt reminds the user to process the projection resource record in the resource list. The receive end device may perform any one of the following processing based on an operation performed by the user in response to the resource list processing prompt: deleting the resource list, clearing the resource list, retaining the resource list, deleting a projection resource record selected by the user in the resource list, retaining a projection resource record selected by the user in the resource list, and the like.

In some embodiments, when the receive end device is powered off, the receive end device determines that the resource list is not empty. In this case, auto-start time of the receive end device may be determined based on the projection resource record in the resource list, to ensure that the unfinished projection resource recorded in the resource list can be properly displayed through projection based on a reservation requirement of the user. The auto-start time may be determined based on the specified projection time of the unfinished projection resource, and the auto-start time may be set as any moment before specified projection time that has a shortest time interval between the auto-start time and the current moment. For example, it is assumed that when the receive end device is powered off, the receive end device determines that the resource list is not empty and the receive end device records two unfinished projection resources: a video 6 and a video 5. Specified projection time corresponding to the video 6 is 16:00 on September 2, 2021, and specified projection time corresponding to the video 5 is 12:00 on September 2, 2021. If start duration of the receive end device is one minute, the receive end device may set the auto-start time to 11:58 on September 2, 2021. In this way, it can be ensured that the receive end device can normally display the video 5 through projection to the user at 12:00 on September 2,2021. In some embodiments, there may be one or more auto-start time. Before being powered off, the receive end device may separately set corresponding auto-start time for each unfinished projection resource for which specified projection time is set in the resource list, to ensure that each unfinished projection resource with the specified projection time can be properly displayed through projection at the specified projection time.

Step S12: When it is determined that the resource list needs to be updated, update the resource list based on the first request.

In step S12, after receiving the first request, the receive end device may determine, based on the first request, whether the resource list needs to be updated. When determining that the resource list needs to be updated, the receive end device updates the resource list based on the first request. When it is determined that the resource list does not need to be updated, the resource list may not be updated. In some embodiments, step S12 may include two implementations: an implementation 1 and an implementation 2.

FIG. 5A, FIG. 5B, FIG. 5C, and FIG. 5D are a schematic flowchart of resource list updating in a projection control method according to an embodiment of this application. In a possible implementation, as shown in FIG. 5A, FIG. 5B, FIG. 5C, and FIG. 5D, in the implementation 1, step S12 may include step S300 to step S308. To illustrate a process in which the receive end device performs step S300 to step S308 in this embodiment of this application, it is assumed that, in a process in which the receive end device displays the first projection resource U1 through projection, before the first request for requesting projection display of the second projection resource U2 is received, the resource list of the receive end device is a resource list 1 shown in FIG. 5A, FIG. 5B, FIG. 5C, and FIG. 5D. It can be learned by referring to the resource list 1 that there are three projection resource records used to record corresponding unfinished projection resources. In this case, the unfinished projection resources include the first projection resource U1, the projection resource U31, and the projection resource U32.

Step S300: Determine, based on the first request and the current resource list, which one of a plurality of operation conditions is met.

In step S300, after the receive end device receives the first request for the second projection resource U2, the receive end device may first determine the request ranking of the second projection resource U2 based on the first request, and determine whether a plurality of unfinished projection resources recorded in the current resource list (for example, the resource list 1 in FIG. 5B) of the receive end device include the second projection resource U2. Then, based on the request ranking of the second projection resource U2 and a result of determining whether the plurality of unfinished projection resources recorded in the current resource list (for example, the resource list 1 in FIG. 5B) include the second projection resource U2, the receive end device further determines which one of the plurality of operation conditions is met, and performs an operation corresponding to the operation condition.

In some embodiments, when the first request indicates the request ranking of the second projection resource U2, the receive end device may directly determine the request ranking of the second projection resource U2 as indicated by the first request. When determining that the first request does not indicate the request ranking of the second projection resource U2, the receive end device may determine the request ranking of the second projection resource U2 as a fourth default request ranking (also referred to as a default request ranking in the receive end device in this specification). The fourth default request ranking may be a request ranking that is preset in the receive end device and that corresponds to the first request that does not indicate a request ranking. For example, the fourth default request ranking may be set as the sequential projection. In this case, when the receive end device determines that the received first request does not indicate the request ranking, the receive end device may determine the request ranking of the second projection resource U2 as the sequential projection based on the fourth default request ranking.

Step S301: When a first operation condition is met, a resource list may not be updated.

In some embodiments, the first operation condition may include: The second projection resource U2 is the same as a target projection resource in the plurality of unfinished projection resources in the resource list, and the request ranking of the second projection resource U2 is consistent with a current projection ranking of the target projection resource. That the request ranking of U2 indicated by the first request is consistent with the current projection ranking of the target projection resource may mean that the request ranking of U2 indicated by the first request does not change the current projection ranking of the target projection resource in the resource list.

In step S301, when determining, based on the determining process in S300, that the first operation condition is met, the receive end device may determine that the first request does not change a sequence, a progress, or the like of each unfinished projecting resource that is displayed by the receive end device through projection based on the resource list. In this case, the receive end device may not update the resource list. For example, as shown in FIG. 5B, it is assumed that the current resource list of the receive end device is the "resource list 1". If U2 indicated by the first request is the same as the projection resource U31 (in this case, the projection resource U31 is a target projection resource), and the request ranking of U2 indicated by the first request is the sequential projection, the receive end device itself performs projection display on the projection resource U31 based on a current projection ranking. Therefore, after receiving the first request, the receive end device may determine that the first operation condition is met, and does not update the resource list. If U2 indicated by the first request is the same as the first projection resource U1 (in this case, the first projection resource U1 is a target projection resource), and the request ranking of U2 indicated by the first request is the sequential projection, the receive end device itself currently performs projection display on the first projection resource U1. After receiving the first request, the receive end device may determine that the first operation condition is met, and does not update the resource list. If U2 indicated by the first request is the same as the projection resource U31 (in this case, the projection resource U31 is a target projection resource), and the request ranking of U2 indicated by the first request is the next projection, the receive end device itself performs projection display on the projection resource U31 after completing projection display of the first projection resource U1. After receiving the first request, the receive end device may determine that the first operation condition is met, and does not update the resource list.

In some embodiments, if the receive end device determines that the request ranking of the second projection resource U2 is the immediate projection, and the second projection resource U2 is the same as the first projection resource U1 (in this case, the first projection resource U1 is a target projection resource), a projection ranking corresponding to U1 may not be adjusted (in other words, the resource list is not updated), and U1 currently displayed through projection continues to be displayed. For example, the receive end device currently displays the video 1 through projection to the user (the video 1 is the first projection resource U1), and there are 10 minutes left to complete playing of the video 1. In this case, if the second projection resource U2 requested for projection display in the first request received by the receive end device is exactly the video 1, the resource list may not be updated, and the video 1 continues to be played until playing of the video 1 is completed 10 minutes later. In some embodiments, if the receive end device determines that the request ranking of the second projection resource U2 is the immediate projection, and the second projection resource U2 is the same as the first projection resource U1 (in this case, the first projection resource U1 is a target projection resource), a projection ranking corresponding to U1 may not be adjusted (in other words, the resource list is not updated), but projection display of the first projection resource U1 may be performed from the beginning. For example, the receive end device currently projects the video 5 whose duration is 30 minutes to the user (the video 5 is the first projection resource U1), and there are 10 minutes left to complete playing of the video 5. In this case, if the second projection resource U2 requested for projection display in the first request received by the receive end device is exactly the video 5, the resource list may not be updated, and the video 5 is played from the beginning until playing of the video 5 is completed 30 minutes later.

Step S302: When it is determined that a second operation condition is met, a current projection ranking of a target projection resource that is the same as the second projection resource and that is in the plurality of unfinished projection resources recorded in the resource list may be adjusted to first projection.

In some embodiments, the second operation condition may include: The request ranking of the second projection resource U2 is the immediate projection, and the plurality of unfinished projection resources recorded in the resource list include a target projection resource that is the same as the second projection resource U2.

In step S302, when the receive end device determines, based on the determining process in S300, that the second operation condition is met, the receive end device may determine that the second projection resource U2 requested for immediate projection has been recorded in the resource list as an unfinished projection resource before the first request is received. In this case, the receive end device may directly adjust the projection ranking of the target projection resource that is the same as the second projection resource U2 and that is in the plurality of unfinished projection resources recorded in the resource list, without a need to add a projection resource record corresponding to the second projection resource U2 to the resource list. For example, as shown in FIG. 5B, it is assumed that the second projection resource U2 indicated by the first request is the same as the projection resource U32 in the plurality of unfinished projection resources recorded in the resource list 1 (in this case, the projection resource U32 is a target projection resource), and the request ranking is the immediate projection. In this case, the receive end device may directly adjust a projection ranking of the projection resource U32 at a current moment to the first projection, to obtain a "resource list 2 (manner 1)" or a "resource list 2 (manner 2)" shown in FIG. 5B. For further descriptions of specific implementations of the manner 1 and the manner 2, refer to related descriptions in step S303. Details are not described herein again.

Step S303: When it is determined that a third operation condition is met, the second projection resource U2 may be added to the resource list as a new unfinished projection resource whose current projection ranking is the foremost.

In some embodiments, the third operation condition may include: The request ranking of the second projection resource U2 indicated by the first request is the immediate projection, and the plurality of unfinished projection resources recorded in the resource list are different from the second projection resource U2.

In step S303, when the receive end device receives the first request and determines, in step S300 with reference to the first request, that the third operation condition is met, the receive end device may determine that the second projection resource U2 indicated by the first request is a new resource that is applied by the user for immediate projection display. In this case, the receive end device may record, in the resource list, the second projection resource U2 as a new unfinished projection resource whose current projection ranking is the foremost. For example, as shown in FIG. 5D, it is assumed that the second projection resource U2 indicated by the first request is different from all unfinished projection resources recorded in the resource list 1, and the request ranking is the immediate projection. In this case, the receive end device may directly add the second projection resource U2 to the resource list as the new unfinished projection resource whose current projection ranking is the foremost, and add the projection resource record of the second projection resource U2 to the resource list, to obtain a "resource list 3 (manner 1)" or a "resource list 3 (manner 2)" shown in FIG. 5D.

In some embodiments, after the receive end device receives the first request, if the receive end device determines that the second operation condition is met and the second projection resource U2 indicated by the first request is different from the first projection resource U1, or the third operation condition is met, the user needs to immediately perform projection display on the second projection resource U2, which may forcibly stop displaying the first projection resource U1 that is different from the second projection resource U2 and whose display is not completed. In this case, the receive end device may process the first projection resource U1 whose projection display is stopped in any one of the following manner 1 and manner 2:
Manner 1: For the first projection resource U1 whose display is stopped because the first request is received, the receive end device may continue to reserve a projection resource record of the first projection resource U1 in the resource list, add a display progress of the first projection resource U1 to projection information of the projection resource record of the first projection resource U1, and adjust a current projection ranking of the first projection resource U1 to first projection after the second projection resource U2. In other words, a projection ranking of the plurality of unfinished projection resources recorded in the updated resource list is the second projection resource U2, the first projection resource U1, and other unfinished projection resources from early to late. Therefore, after the second projection resource U2 is displayed, the receive end device may continue to display the first projection resource U1 based on the display progress of the first projection resource U1 recorded in the resource list.

For example, as shown in FIG. 5B, if the receive end device determines that the "projection resource U32" in the plurality of unfinished projection resources in the resource list 1 is the same as the second projection resource U2 (in this case, the projection resource U32 is a target projection resource), and the request ranking of the second projection resource U2 is the immediate projection, the receive end device may determine that the second operation condition is met. The receive end device may directly adjust a projection ranking of the "projection resource U32" to the foremost, adjust a projection ranking of the first projection resource U1 whose original projection ranking is the foremost to next one after the "projection resource U32", add the display progress of the first projection resource U1 to projection information corresponding to the first projection resource U1, keep a projection ranking of a projection resource (if any) whose previous projection ranking is after the "projection resource U32" in the other unfinished projection resources unchanged, and move a projection ranking of each projection resource whose previous projection ranking is before the "projection resource U32" in the other unfinished projection resources (for example, the first projection resource U1 and the projection resource U31) backward by one location (for example, the projection ranking of the first projection resource U1 changes from "1" to "2", and the projection ranking of the projection resource U31 changes from "2" to "3"), to obtain a resource list "resource list 2 (manner 1)" in FIG. 5B.

As shown in FIG. 5D, if the receive end device determines that the plurality of unfinished projection resources in the resource list 1 are different from the second projection resource U2 and the request ranking of the second projection resource U2 is the immediate projection, the receive end device may determine that the third operation condition is met. The receive end device may directly add the second projection resource U2 to the resource list as a new unfinished projection resource whose current projection ranking is the foremost, adjust the projection ranking of the first projection resource U1 whose original projection ranking is the foremost to next one after the second projection resource U2, add the display progress of the first projection resource U1 to the projection information corresponding to the first projection resource U1, and move a projection ranking of the other unfinished projection resources backward by one location (for example, the projection ranking of the projection resource U31 is changed from "2" to "3", and the projection ranking of the projection resource U32 is changed from "3" to "4"), to obtain the resource list "resource list 3 (manner 1)" in FIG. 5D.

Manner 2: For the first projection resource U1 whose display is stopped because the first request is received, a corresponding projection resource record may be directly deleted from the resource list. In other words, projection rankings of the plurality of unfinished projection resources recorded in the updated resource list are successively the second projection resource U2 and other projection resources from early to late. Therefore, after the second projection resource U2 is displayed, the receive end device may directly display the other projection resources without re-displaying the first projection resource U1.

For example, as shown in FIG. 5B, if the receive end device determines that the "projection resource U32" in the plurality of unfinished projection resources in the resource list 1 is the same as the second projection resource U2 (in this case, the projection resource U32 is a target projection resource), and the request ranking is the immediate projection, the receive end device may determine that the second operation condition is met. The receive end device may directly adjust a current projection ranking of the "projection resource U32" to the foremost, delete a projection resource record of the first projection resource U1 whose original projection ranking is the foremost, move a projection ranking of a projection resource (if any) whose projection resource is after the "projection resource U32" in the other unfinished projection resources forward by one location, and keep a projection ranking of each projection resource (for example, the projection resource U31) whose projection ranking is before the "projection resource U32" in the other unfinished projection resources unchanged, to obtain a resource list "resource list 2 (manner 2)" in FIG. 5B.

As shown in FIG. 5D, if the receive end device determines that the plurality of unfinished projection resources in the resource list 1 are different from the second projection resource U2 and the request ranking is the immediate projection, the receive end device may determine that the third operation condition is met. The receive end device may directly add the second projection resource U2 to the resource list as a new unfinished projection resource whose current projection ranking is the foremost, and delete an original projection resource record of the first projection resource U1, to obtain the resource list "resource list 3 (manner 2)" in FIG. 5D.

In some embodiments, after the receive end device performs step S302 and/or step S303 or determines that the second operation condition or the third operation condition is met, the receive end device may determine that projection display of the first projection resource U1 needs to be stopped, and step S15 may be directly performed. In step S15, display of the first projection resource U1 that is currently displayed through projection is stopped, and projection display of the second projection resource U2 is performed.

Step S304: When a fourth operation condition is met, the second projection resource U2 may be added to the resource list as a new unfinished projection resource whose current projection ranking is the last.

In some embodiments, the fourth operation condition may include: The request ranking of the second projection resource U2 indicated by the first request is the sequential projection, and the plurality of unfinished projection resources recorded in the resource list are different from the second projection resource U2.

In step S304, when receiving the first request for the second projection resource U2, and determining, based on step S300, that the fourth operation condition is met, the receive end device may determine that the second projection resource U2 indicated by the first request is a new resource that is applied by the user for projection display in a queuing sequence. In this case, the receive end device may add, to the resource list, the second projection resource U2 as the new unfinished projection resource whose current projection ranking is the last, and add the projection resource record corresponding to the second projection resource to the resource list. For example, as shown in FIG. 5D, it is assumed that the second projection resource U2 indicated by the first request is different from all unfinished projection resources recorded in the resource list 1, and the request ranking is the sequential projection. In this case, the receive end device may directly add the second projection resource U2 to the resource list as the new unfinished projection resource whose current projection ranking is the last, and add the projection resource record corresponding to the second projection resource U2 to the resource list, to obtain a "resource list 4" shown in FIG. 5D.

Step S305: When a fifth operation condition is met, the projection ranking of the target projection resource that is the same as the second projection resource U2 and that is in the plurality of unfinished projection resources recorded in the resource list may be adjusted to next one after the first projection resource U1. In other words, the receive end device adjusts the projection ranking of the target projection resource to the unfinished projection resource immediately after the first projection resource U1.

In some embodiments, the fifth operation condition may include: The second projection resource U2 is the same as a target projection resource in the plurality of unfinished projection resources in the resource list, and the request ranking is the next projection.

In step S305, when determining, based on the determining process in S300, that the fifth operation condition is met, the receive end device may determine that the second projection resource U2 indicated by the first request has been recorded in the resource list as the unfinished projection resource before the first request is received. In this case, the receive end device may directly adjust the projection ranking of the target projection resource that is the same as the second projection resource U2 and that is in the plurality of unfinished projection resources recorded in the resource list, without a need to add the projection resource record corresponding to the second projection resource U2 to the resource list. For example, as shown in FIG. 5A, it is assumed that the second projection resource U2 indicated by the first request is the same as the projection resource U32 in the plurality of unfinished projection resources recorded in the resource list 1 (in this case, the projection resource U32 is a target projection resource), and the request ranking is the next projection. In this case, the receive end device may directly adjust a current projection ranking of the projection resource U32 to be next one after the first projection resource U1, to obtain a "resource list 5" shown in FIG. 5A.

Step S306: When a sixth operation condition is met, the second projection resource U2 that is displayed through projection as a new unfinished projection resource whose current projection ranking is next one after the first projection resource U1 may be added to the resource list. The receive end device may record, in the resource list, the second projection resource U2 as an unfinished projection resource immediately after the first projection resource U2.

In some embodiments, the sixth operation condition may include: The second projection resource U2 is different from the plurality of unfinished projection resources in the resource list, and the request ranking is the next projection.

In step S306, when determining, based on the determining process in S300, that the sixth operating condition is met, the receive end device may determine that the second projection resource U2 indicated by the first request is a new resource that is applied by the user for projection display next after the first projection resource U1 is displayed. In this case, the receive end device may add, to the resource list, the second projection resource U2 that is displayed through projection as a new unfinished projection resource whose current projection ranking is next one after the first projection resource U1. In other words, a projection resource record corresponding to the second projection resource U2 is added to the resource list. For example, as shown in FIG. 5C, it is assumed that the second projection resource U2 indicated by the first request is different from all unfinished projection resources recorded in the resource list 1, and the request ranking is the next projection. In this case, the receive end device may directly add the projection resource record corresponding to the second projection resource U2 to the resource list, where it is recorded in the projection resource record that a current projection ranking of the second projection resource U2 is next one after the first projection resource U1, or it is recorded in the projection resource record that a current projection ranking of the second projection resource U2 is a first projection ranking in projection resources other than U1 in the plurality of unfinished projection resources, so as to obtain a "resource list 6" shown in FIG. 5C.

Step S307: When a seventh operation condition is met, a projection ranking of a target projection resource that is the same as the second projection resource U2 and that is in the plurality of unfinished projection resources recorded in the resource list is adjusted based on specified projection time, for example, the projection ranking of the target projection resource that is the same as the second projection resource U2 and that is in the plurality of unfinished projection resources recorded in the resource list may be adjusted to a sequence corresponding to the specified projection time.

In some embodiments, the seventh operation condition may include: The second projection resource U2 is the same as a target projection resource in the plurality of unfinished projection resources in the resource list, and the request ranking is the specified reserved projection.

In step S307, when the receive end device determines, based on the determining process in S300, that the seventh operation condition is met, the receive end device may determine that the second projection resource U2 requested for specified reserved projection has been recorded in the resource list as an unfinished projection resource before the first request is received. In this case, the receive end device may directly adjust a current projection ranking of the target projection resource that is the same as the second projection resource U2 and that is in the plurality of unfinished projection resources recorded in the resource list, without a need to add the projection resource record corresponding to the second projection resource U2 to the resource list. For example, as shown in FIG. 5A, it is assumed that the second projection resource U2 indicated by the first request is the same as the projection resource U31 in the plurality of unfinished projection resources recorded in the resource list 1 (in this case, the projection resource U31 is a target projection resource), and the request ranking is the specified reserved projection, the receive end device may directly adjust a current projection ranking of the projection resource U31 to a projection ranking corresponding to the specified projection time indicated in the first request, to obtain a "resource list 7" shown in FIG. 5A.

Step S308: When an eighth operation condition is met, the second projection resource U2 may be recorded in the resource list based on specified projection time, for example, the second projection resource U2 may be added to the resource list as a new unfinished projection resource based on a projection ranking corresponding to the specified projection time of the second projection resource U2.

In some embodiments, the eighth operation condition may include: The second projection resource U2 is different from the plurality of unfinished projection resources in the resource list, and the request ranking is the specified reserved projection.

In step S308, when the receive end device determines, based on the determining process in S300, that the eighth operating condition is met, the receive end device may determine that the second projection resource U2 indicated by the first request is a new resource that is applied by the user for projection display at specified projection time. In this case, the receive end device may use the second projection resource U2 as a new unfinished projection resource, and add a projection resource record corresponding to the second projection resource U2 in the resource list based on a projection ranking corresponding to the specified projection time of the second projection resource. For example, it is assumed that the second projection resource U2 indicated by the first request is different from all unfinished projection resources recorded in the resource list 1, and the request ranking is the specified reserved projection. In this case, the receive end device may directly add a new projection resource record corresponding to the second projection resource U2 to the resource list, to obtain a "resource list 8" as shown in FIG. 5C, where it is recorded in the projection resource record that a projection ranking of the second projection resource U2 is a projection ranking corresponding to the specified projection time indicated in the first request.

In some embodiments, when the receive end device determines that the request ranking indicated by the first request is the specified reserved projection, before the receive end device performs step S307 or step S308, the receive end device may directly determine that the receive end device may display the second projection resource U2 through projection at specified projection time corresponding to the specified reserved projection.

In some embodiments, when the receive end device determines that the request ranking indicated by the first request is the specified reserved projection, before the receive end device performs step S307 or step S308, the receive end device may alternatively determine, based on the specified projection time corresponding to the second projection resource U2 and information about each unfinished projection resource recorded in the current resource list, whether the receive end device may perform projection display on the second projection resource U2 at the specified projection time corresponding to the second projection resource U2. If the receive end device may perform projection display on the second projection resource U2 at the specified projection time corresponding to the second projection resource U2, the receive end device performs step S307 or step S308. If the receive end device cannot perform projection display on the second projection resource U2 at the specified projection time corresponding to the second projection resource U2, the receive end device may send a reservation adjustment message to a transmit end device that requests to display the second projection resource U2 through projection. The reservation adjustment message is used to control the transmit end device to remind the user that the receive end device cannot display the second projection resource U2 through projection at the specified projection time. The reservation adjustment message may further remind the user to adjust a request ranking of the second projection resource U2. Then, the step S300 is repeated based on a response of the user to the reservation adjustment message. Alternatively, when no response of the user to the reservation adjustment message is received, the step S301 is performed.

In some embodiments, when receiving the reservation adjustment message, the transmit end device may send a reservation adjustment prompt. The reservation adjustment prompt reminds the user that the receive end device cannot display the second projection resource U2 through projection at the specified projection time, and may remind the user to adjust the request ranking of the second projection resource U2. Then, the transmit end device may determine, based on a detected operation performed by the user in response to the reservation adjustment prompt, a new request ranking that is of the second projection resource U2 and that is reselected by the user. The reservation adjustment prompt may be sent by using a voice and/or displayed on a display of the transmit end device. The reservation adjustment prompt may include a text prompt and/or a voice prompt, for example, "Your U2 cannot be displayed through projection at 15:00 on August 29, 2021. Please reselect a request ranking". The reservation adjustment prompt may further include a request ranking for reminding the user to reselect the second projection resource U2 that is requested by the user for projection display. In some embodiments, for the reservation adjustment prompt displayed on the display, controls for selecting different request rankings may be displayed to the user in the reservation adjustment prompt, and a request ranking corresponding to each control may be identified. For example, controls K12, K13, and K15 shown in FIG. 3A-1 may be displayed in the reservation adjustment prompt. Then, the request ranking reselected by the user is determined based on a detected trigger operation of the user for each control. In some embodiments, for the reservation adjustment prompt sent by using the voice, a voice, for example, "Which one of immediate projection, next projection, sequential projection, and specified reserved projection do you want to perform on a second projection resource U2?" may be further sent to the user, and analysis processing may be performed based on a detected response voice sent by the user in response to the reservation adjustment prompt, to determine a new request ranking reselected by the user. After determining the new request ranking that is of the second projection resource U2 and that is selected by the user, the transmit end device may generate a new first request corresponding to the second projection resource U2 and send the request to the receive end device, or send the new request ranking to the receive end device as supplementary information of the original first request, so that the receive end device repeats the step S300 based on the new first request or the supplementary information. Alternatively, if the transmit end device determines, based on an operation performed by the user in response to the reservation adjustment prompt, that the user no longer requests to display the second projection resource U2 through projection, the transmit end device may send a non-projection instruction to the receive end device, so that the receive end device performs a corresponding operation based on the non-projection instruction, for example, performs the step S301. Alternatively, if the transmit end device determines, based on an operation performed by the user in response to the reservation adjustment prompt, that the user no longer requests to display the second projection resource U2 through projection, the transmit end device may not provide a feedback for the receive end device, so that the receive end device performs the step S301 when determining that the user does not respond to the reservation adjustment message.

In some embodiments, the reservation adjustment message may include optional projection time that is obtained by the receive end device through calculation based on the current resource list and that can be used to display the second projection resource U2 through projection. Therefore, the transmit end device may remind, based on the optional projection time in the reservation adjustment message, the user to choose whether to perform projection display on the second projection resource U2 at the optional projection time.

In some embodiments, an implementation in which the receive end device determines, based on the specified projection time corresponding to the second projection resource U2 and the information about each unfinished projection resource in the current resource list, whether the receive end device may perform projection display on the second projection resource U2 at the specified projection time corresponding to the second projection resource U2 may include: determining, based on a projection progress of the first projection resource U1 currently displayed through projection, remaining duration S1 for displaying the first projection resource U1; determining, based on projection information of another unfinished projection resource in the resource list, projection duration S3 for displaying each unfinished projection resource; and when the specified projection time corresponding to the second projection resource U2 is between two moments at which two unfinished projection resources are displayed through projection, determining that the receive end device may perform projection display on the second projection resource U2 at the specified projection time corresponding to the second projection resource U2. For example, it is assumed that the current resource list is the resource list 1 in FIG. 5B. If the current moment is 10:00 on August 29, 2021, the remaining duration S1 for displaying the first projection resource U1 is 20 minutes, and the projection duration S3 for displaying the projection resource U31 and the projection resource U32 in each unfinished projection resource is respectively 50 minutes and 80 minutes, it may be determined that a second projection resource whose specified projection time is after 10:20 on August 29, 2021, 11:10 on August 29, 2021, and 12:30 on August 29, 2021 may be displayed by the receive end device through projection. If the specified projection time of the second projection resource U2 is 15:00 on August 29, 2021, because the receive end device is idle at this time, the receive end device may determine that the receive end device can perform projection display on the second projection resource U2 at the specified projection time corresponding to the second projection resource U2. If the specified projection time of the second projection resource U2 is 10:10 on August 29, 2021, because the receive end device currently displays the first projection resource U1 through projection at this time, the receive end device may determine that the receive end device cannot perform projection display on the second projection resource U2 at the specified projection time corresponding to the second projection resource U2. Optionally, the receive end device may further send the reservation adjustment message to the transmit end device, so that the transmit end device sends, based on the reservation adjustment message, a reservation adjustment prompt "Projection time you specify for U2 conflicts with display time of another projection resource. Please select a reservation policy again, or re-specify projection time".

In some embodiments, when the receive end device determines the specified projection time of the second projection resource U2, the receive end device currently displays the first projection resource U1 through projection. Even so, the receive end device may perform projection display on the second projection resource U2 at the specified projection time corresponding to the second projection resource U2, and interrupt or terminate projection display of the first projection resource U1. In this way, the receive end display can forcibly start projection display of the second projection resource U2 at the specified projection time of the second projection resource U2. In this case, optionally, the transmit end device may also send a prompt message "Projection time you specify for U2 conflicts with display time of another projection resource. Are you sure you want to forcibly perform projection display on U2 at specified projection time?" When the transmit end device receives a positive reply of the user, the receive end device forcibly starts projection display of the second projection resource U2 at the specified projection time of the second projection resource U2.

A person skilled in the art may set, based on actual requirements, an implementation in which the receive end device determines whether the receive end device may perform projection display on the second projection resource U2 at the specified projection time corresponding to the second projection resource U2. This is not limited in this application.

In some embodiments, when the receive end device determines that the seventh operation condition or the eighth operation condition is met, the receive end device may set a corresponding timer based on the specified projection time, so that the receive end device displays the second projection resource U2 through projection to the user at the specified projection time that is determined by the timer when the receive end device is in a continuous working state. When the receive end device is powered off, if the timer does not complete corresponding timing and a corresponding projection resource record is still stored in the resource list, the receive end device may set corresponding auto-start time by using the timer, to ensure that a corresponding second projection resource U2 is displayed through projection at the specified projection time. If the receive end device has been started to work before the auto-start time, the receive end device may reset a corresponding timer based on the set auto-start time during startup, to perform projection display at the specified projection time.

Step S13: Determine whether to stop projection display of the first projection resource U1 that is currently displayed.

In step S13, after step S12 is performed, the receive end device may determine whether to stop projection display of the first projection resource U1 that is currently displayed. When it is determined that projection display of the first projection resource U1 needs to be stopped, step S15 is performed. When it is determined that projection display of the first projection resource U1 does not need to be stopped, step S14 is performed.

In some embodiments, each time after completing resource list update based on the first request, the receive end device may determine, based on the updated resource list, whether an unfinished projection resource whose current projection ranking is the foremost in the plurality of unfinished projection resources in the current resource list is the first projection resource U1. If the unfinished projection resource is the first projection resource U1, it is determined that projection display of the first projection resource U1 does not need to be stopped; or if the unfinished projection resource is not the first projection resource U1, it is determined that projection display of the first projection resource U1 needs to be stopped and the second projection resource U2 needs to be displayed.

In some embodiments, each time after, before, or in a process of completing resource list update based on the first request, the receive end device may alternatively determine, based on the determined request ranking corresponding to the second projection resource U2 (the request ranking corresponding to U2 is determined based on the first request or determined based on the fourth default request ranking), whether to stop projection display of the first projection resource U1 that is currently displayed. If the request ranking is the immediate projection, it is determined that projection display of the first projection resource U1 needs to be stopped and the second projection resource U2 needs to be displayed; or if the request ranking is not the immediate projection, it is determined that projection display of the first projection resource U1 does not need to be stopped.

In some embodiments, the receive end device may further determine, based on a user input, whether to stop projection display of the first projection resource U1 and display the second projection resource U2. In some embodiments, after the receive end device receives the first request, when the receive end device determines that projection display of the first projection resource U1 needs to be stopped, the receive end device may further send a stop prompt. The stop prompt reminds the user that display of the first projection resource U1 needs to be stopped and display of the second projection resource U2 needs to be performed due to the received first request. The stop prompt may further remind the user whether it is allowed to stop displaying the first projection resource U1 and display the second projection resource U2. The stop prompt may include a text displayed on the display and/or a voice sent, for example, "Is projection display of a second projection resource U2 performed now?" Then, the receive end device may determine, based on a detected operation performed by the user in response to the stop prompt, whether to stop projection display of the first projection resource U1 and display the second projection resource U2.

For example, if the stop prompt is a prompt that is displayed on the display and includes the text "Is projection display of a second projection resource U2 performed now?", the stop prompt may further include a "Yes" control and an "No" control that can be operated by the user to select whether to stop displaying U1 and start to display U2, to facilitate a response of the user. When a trigger operation of the user on the "Yes" control in the stop prompt is detected, the receive end device may determine that the user is allowed to stop projection display of the first projection resource U1 and display the second projection resource U2. When a trigger operation of the user on the "No" control in the stop prompt is detected, the receive end device may determine that the user is disallowed to stop projection display of the first projection resource U1. Alternatively, the receive end device may determine, based on a detected response voice sent by the user in response to the stop prompt displayed on the display, whether the user is allowed to stop projection display of the first projection resource U1 and display the second projection resource U2. If the stop prompt is displayed as a voice prompt "Is projection display of a second projection resource U2 performed now?", when the receive end device obtains, through analysis, that a detected response voice sent by the user in response to the stop prompt includes deterministic indication a text such as "Yes" or "OK", the receive end device determines that the user is allowed to stop projection display of the first projection resource U1 and display the second projection resource U2; or if the stop prompt is not displayed as a voice prompt, the receive end device determines that the user is disallowed to stop projection display of the first projection resource U1. Alternatively, after waiting duration for sending the stop prompt reaches preset waiting duration, if the receive end device may not detect an operation sent by the user in response to the stop prompt, the receive end device may determine that the user is allowed to stop projection display of the first projection resource U1 and display the second projection resource U2.

In some embodiments, when determining, based on an operation performed by the user in response to the stop prompt, that the user is disallowed to stop projection display of the first projection resource U1, the receive end device may directly change the projection ranking of the second projection resource U2 from the immediate projection originally indicated by the first request to the next projection, and adaptively change a corresponding projection resource record in the resource list, to perform projection display on the second projection resource U2 after completing projection display of the first projection resource U1.

In some embodiments, when determining, based on an operation performed by the user in response to the stop prompt, that the user is disallowed to stop projection display of the first projection resource U1, the receive end device may send a projection disallowing message to the transmit end device, so that the transmit end device sends, based on the projection disallowing message, a projection disallowing prompt to the user on the display or by using a voice. The projection disallowing prompt may remind the user that the second projection resource U2 requested by the user for immediate projection is disallowed for immediate projection. The projection disallowing prompt may further remind the user to select a new request ranking for the second projection resource U2. An implementation of the projection disallowing prompt is similar to the implementation of the "reservation adjustment prompt". A person skilled in the art may set the implementation of the "projection disallowing prompt" based on actual requirements and with reference to the implementation of the "reservation adjustment prompt". This is not limited in embodiments of this application. Then, the transmit end device may determine, based on an operation performed by the user in response to the projection disallowing prompt, the new request ranking selected by the user for the second projection resource U2. Further, the transmit end device may generate a new first request corresponding to the second projection resource U2 and send the request to the receive end device, or send the new request ranking to the receive end device as supplementary information of the original first request, so that the receive end device repeats the step S300 based on the new first request or the supplementary information. Alternatively, if the transmit end device determines, based on an operation performed by the user in response to the projection disallowing prompt, that the user no longer requests projection display of the second projection resource U2, the transmit end device may send a non-projection instruction to the receive end device or may not feed back any information to the receive end device, so that the receive end device performs a corresponding operation based on the non-projection instruction or when no response of the user to the projection disallowing message is received, for example, step S301 is directly performed, or the projection resource record of the second projection resource in the resource list is deleted when the projection resource record corresponding to the second projection resource is added to the resource list.

Step S14: If a determining result is "Yes" in step S13, continue to perform projection display on the first projection resource U1.

In some embodiments, in step S14, the receive end device continues to perform projection display on the first projection resource U1 until display of the first projection resource U1 is completed, or projection display of the first projection resource U1 is stopped because the receive end device receives a new first request again.

In some embodiments, after it is determined that projection display of the first projection resource U1 is completed, the first projection resource U1 may be deleted from the resource list, and step S16 continues to be performed.

Step S15: If a determining result is "No" in step S13, stop projection display of the first projection resource U1 that is currently displayed.

In some embodiments, in step S15, the receive end device stops projection display of the first projection resource U1 that is currently displayed, and starts projection display of the second projection resource U2 until display of the second projection resource U2 is completed, or projection display of the second projection resource U2 is stopped because a new first request is received again (if the new first request is received, the second projection resource U2 that is displayed through projection is a first projection resource relative to the new first request).

In some embodiments, after it is determined that projection display of the second projection resource U2 is completed, the second projection resource U2 may be deleted from the resource list, and step S16 continues to be performed.

Step S16: After projection display of the first projection resource U1 or the second projection resource U2 is completed, determine whether an unfinished projection resource that can be immediately displayed exists in the resource list. If the unfinished projection resource exists, step S17 is performed; or if the unfinished projection resource does not exist, step S18 is performed.

In some embodiments, after projection display of the first projection resource U1 or the second projection resource U2 is completed, it is first determined whether the resource list is empty. If the resource list is empty, step S18 is performed. If the resource list is not empty, the receive end device may determine, based on a projection resource record of each unfinished projection resource currently recorded in the resource list, whether an unfinished projection resource whose projection ranking is the foremost in all unfinished projection resources can be immediately displayed. If the unfinished projection resource can be immediately displayed, step S17 is performed; or if the unfinished projection resource cannot be immediately displayed, continue to wait until it is determined that the unfinished projection resource whose projection ranking is the foremost in all of the unfinished projection resources can be immediately displayed, and then step S17 is performed. If specified projection time is set for the unfinished projection resource whose projection ranking is the foremost in all of the unfinished projection resources, and a current moment is before the specified projection time, it may be determined that the unfinished projection resource whose projection ranking is the foremost in all of the unfinished projection resources cannot be displayed immediately. If specified projection time is set for the unfinished projection resource whose projection ranking is the foremost in all of the unfinished projection resources, and a current moment reaches the specified projection time, it may be determined that the unfinished projection resource whose projection ranking is the foremost in all of the unfinished projection resources can be immediately displayed. If specified projection time is not set for the unfinished projection resource whose projection ranking is the foremost in all of the unfinished projection resources, it may be determined that the unfinished projection resource whose projection ranking is the foremost in all of the unfinished projection resources can be immediately displayed.

Step S17: If a determining result is "Yes" in step S16, perform projection display on an unfinished projection resource whose projection ranking is the foremost. The receive end device may perform projection display based on projection information of the unfinished projection resource that is recorded in the resource list and whose projection ranking is the foremost.

In some embodiments, in step S17, the receive end device performs projection display on the unfinished projection resource whose projection ranking is the foremost until projection display of the unfinished projection resource is completed, or projection display of the unfinished projection resource is stopped because a new first request is received again (if the new first request is received, the unfinished projection resource that is displayed through projection is a first projection resource relative to the new first request).

In some embodiments, after it is determined that projection display of the unfinished projection resource is completed, the unfinished projection resource whose display is completed may be deleted from the resource list, and step S16 continues to be performed.

Step S18: End projection display if a determining result is "No" in step S16, that is, it is determined that there is no unfinished projection resource waiting for projection display in the resource list.

In some embodiments, after receiving the new first request, the receive end device may re-establish or update the resource list, and display a projection resource.

FIG. 6A to FIG. 6D are schematic diagrams in which a first interface changes according to an embodiment of this application.

In a possible implementation, when determining that the receive end device meets a display condition, the receive end device displays a current resource list on a first interface that displays a first projection resource U1, a second projection resource U2, or other unfinished projection resources. A manner of displaying the current resource list may include displaying resource-related information of some or all unfinished projection resources in the current resource list. For example, as shown in FIG. 6A, when the receive end device currently displays the first projection resource U1 to the user and determines that the display condition is met, the first interface switches from a display state Y1 in FIG. 6A to a display state Y11 or Y12. In a sidebar T3 on the first interface, the resource-related information of the some or all unfinished projection resources is displayed to the user.

In some embodiments, in a case in which the receive end device determines that the display condition is met, the resource-related information of each unfinished projection resource displayed to the user on the first interface may include: a projection ranking, a resource identifier like a name, introduction information such as projection duration and a thumbnail, projection information, and information about a corresponding unfinished projection resource, such as a projection progress (the projection progress may include projection start time, estimated projection end time like remaining display duration, and a current display progress, such as whether projection is currently performed), so that the user can learn about an overall projection progress of the receive end device based on the displayed resource-related information, for example, a quantity of unfinished projection resources that need to be displayed, basic information about unfinished projection resources that wait to be displayed, and a projection progress.

In some embodiments, each projection resource record may further include introduction information for describing an unfinished projection resource, such as a name, a thumbnail, and projection duration of a corresponding unfinished projection resource. In the resource lists 1 to 8 in FIG. 5 A, FIG. 5B, FIG. 5C, and FIG. 5D, the "first projection resource U1", the "projection resource U31", the "projection resource U32", and the "second projection resource U2" recorded in the "Resource" column are corresponding resource names. When the resource-related information is displayed to the user on the first interface in the display state Y11 or Y12 in FIG. 6A, a name of the unfinished projection resource may be displayed to the user.

In a possible implementation, that the receive end device determines that the receive end device meets the display condition may include at least one of the following: The receive end device receives a projection resource list display request; the receive end device detects that projection display of a next unfinished projection resource starts; and the receive end device detects that a resource list changes.

In some embodiments, that the receive end device determines that the receive end device meets the display condition includes that the receive end device receives the projection resource list display request. In this way, the resource-related information of the some or all unfinished projection resources can be displayed based on the projection resource list display request triggered by the user as needed. The projection resource list display request may be sent by the user by controlling the transmit end device, a display of the receive end device, a physical button of the receive end device, and/or an external input device of the receive end device. In some embodiments, the external input device may be a mouse, a remote control, a laser pointer, a stylus, a keyboard, or the like. However, the external input device may be classified into a device with a cursor and a device without a cursor according to whether the external input device of the user displays a cursor corresponding to the external input device to the user on the first interface. The device with a cursor may include a mouse, a laser pointer, and the like. Shapes, colors, and the like of cursors displayed by different device with a cursor on the first interface may be the same or may be different. The device without a cursor may include a remote control, a stylus, and the like.

In some embodiments, when a physical button for sending the projection resource list display request is disposed on the external input device, and it is detected that the physical button is triggered, it may also be determined that the user sends the projection resource list display request by controlling the external input device.

In some embodiments, when detecting a touch operation performed by the user on the device without a cursor of the receive end device, the receive end device may display, on the first interface, all controls that can be operated by the user and that include a third control, and highlight (for example, border adding or flashing) a currently selected control on the first interface. Then, when determining, based on a further operation performed by the user on the device without a cursor, that the user selects the third control and triggers the third control, the receive end device determines that the user sends the projection resource list display request by controlling the device without a cursor.

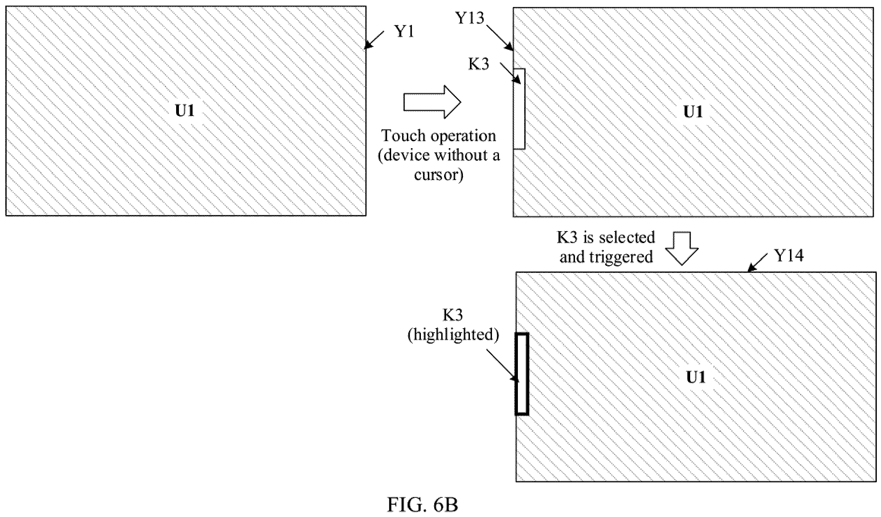

For example, as shown in FIG. 6B, the device without a cursor is a remote control. When detecting a touch operation performed by the user on the remote control, the receive end device displays to the user that the first interface may switch from the display state Y1 to a display state Y13. For example, on the first interface in the display state Y13, the receive end device displays U1 and all operable controls including the third control K3 to the user (in FIG. 6B, except K3, another control that can be used by the user to perform a touch operation is not shown, to illustrate a triggering process of the third control K3). Then, the receive end device may highlight, on the first interface in the display state Y13, a selected control determined from the operable controls (for example, an operable control selected when it is detected last time that the user stops operating the remote control may be used as the selected control that is first highlighted this time, or a default control that is first highlighted and selected in advance from all operable controls may be highlighted). Then, based on an operation performed by the user on a direction button like "Up", "Down", "Left", or "Right" of the remote control, the receive end device determines an operable control selected by the user each time the direction button is triggered, and highlights the operable control. When detecting that a currently selected operable control is the third control K3 (in this case, the first interface switches from the display state Y13 to a display state Y14, and the third control K3 is highlighted on the first interface in the display state Y14), and detecting a determining operation performed by the user by using the remote control on the third control K3, the receive end device may determine that the projection resource list display request is detected. In some embodiments, the determining operation performed by the user by using the remote control on the third control K3 may be a triggering operation performed by the user on a physical button like "OK" on the remote control.

In some embodiments, when detecting a touch operation performed by the user on the device with a cursor, the receive end device displays, on the first interface, a cursor corresponding to the device with a cursor to the user, and adjusts a movement direction, a speed, a track, and/or a display location of the cursor on the first interface based on an operation performed by the user on the device with a cursor. When detecting that the cursor is moved to an area at which the third control K3 is located, or when detecting that the cursor is moved to an area at which the third control K3 is located and the user inputs a determining operation by using the device with a cursor, the receive end device determines that the user sends the projection resource list display request by controlling the device with a cursor.

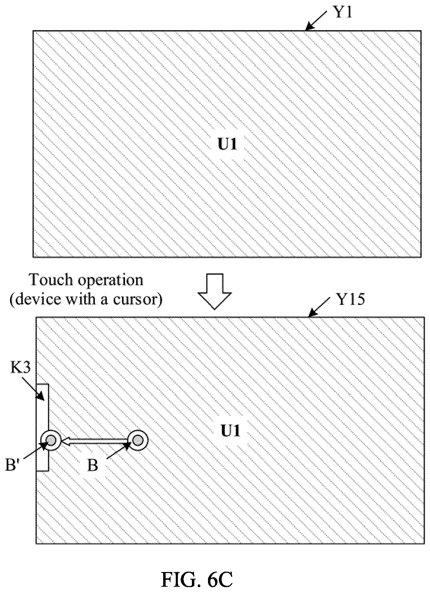

For example, as shown in FIG. 6C, a mouse in the device with a cursor is used. When detecting a touch operation performed by the user on the mouse, the receive end device displays to the user that the first interface may switch from the display state Y1 to a display state Y15. For example, on the first interface in the display state Y15, the receive end device displays U1, all operable controls including the third control K3 (in FIG. 6C, except K3, another control that can be used by the user to perform a touch operation is not shown, to illustrate a triggering process of the third control K3), and a mouse B corresponding to the mouse to the user. Then, the receive end device determines a movement change of the cursor B on the first interface based on a sliding operation performed by the user on the mouse and displays the movement change. When detecting that the cursor B is moved to a location B' in an area in which the third control K3 is located, the receive end device may determine that the projection resource list display request is detected. Alternatively, when detecting that the cursor B is moved to a location B' in an area in which the third control K3 is located, and detecting a determining operation performed by the user on the third control K3 by using a button of the mouse (the determining operation may be an operation of clicking a left mouse button and the like), the receive end device may determine that the projection resource list display request is detected.

In some embodiments, the transmit end device may generate the projection resource list display request based on a detected user operation, and send the request to the receive end device. A physical button for sending the projection resource list display request may be disposed on the transmit end device. When detecting that the physical button is triggered, the transmit end device generates the projection resource list display request. Alternatively, the display of the transmit end device may be a control interface that is displayed to the user and that is used to operate the receive end device, and a control for sending the projection resource list display request may be displayed on the control interface. When detecting that the control is triggered, the transmit end device generates the projection resource list display request, and sends the request to the receive end device. Alternatively, the transmit end device may be used by the user as the "external input device" of the receive end device, and respond to a user operation in an implementation similar to that in which the user sends the projection resource list display request by using a "mouse" or a "remote control", to send the projection resource list display request.

In some embodiments, the display of the receive end device is a touchscreen. When detecting a touch operation performed by the user by using a finger or a stylus on the touchscreen, the receive end device displays, to the user on the first interface, all operable controls that can be operated by the user and that include the third control. Then, when determining, based on the touch operation performed by the user by using the finger or the stylus, that the third control is triggered, the receive end device determines that the user sends the projection resource list display request by controlling the touchscreen.

In some embodiments, when a physical button for sending the projection resource list display request is disposed on the receive end device, and it is detected that the physical button is triggered, it may be determined that the user sends the projection resource list display request by controlling the physical button of the receive end device.

It should be noted that the foregoing manner in which the user sends the projection resource list display request by controlling the transmit end device, the external input device of the receive end device, and the receive end device is merely an example implementation provided in this application. A person skilled in the art may set an implementation of the projection resource list display request based on actual requirements. This is not limited in this application.

In some embodiments, the display condition may further include: A time interval between a current moment and a moment at which resource-related information of an unfinished projection resource is displayed last time reaches a time interval threshold. For example, when the first projection resource U1 is displayed on the first interface, "resource-related information of each unfinished projection resource" may be displayed once every 20 minutes. In this way, the user can view "resource-related information of an unfinished projection resource" at a specific interval, to learn about an overall projection progress of the receive end device.

In some embodiments, the display condition may further include detecting that projection display of a next unfinished projection resource starts. In this case, the receive end device may display the "resource-related information of the some or all of the unfinished projection resources" to the user each time the next unfinished projection resource starts to be displayed. In this way, the user can learn about the overall projection progress at a start stage of projection display of an unfinished projection resource.

In some embodiments, the display condition may further include detecting that a resource list changes. In this case, each time the receive end device detects that the resource list changes, the receive end device may display the resource-related information of the some or all unfinished projection resources to the user, to ensure that the user can learn about an update change of the resource list timely. The change of the resource list may be caused by an update performed when the first request is received, deleting a corresponding projection resource record in the resource list after projection display of an unfinished projection resource that is in the resource list and whose projection ranking is the foremost is completed, and the like. If detecting the change of the resource list in a process of displaying the resource-related information of the some or all unfinished projection resources to the user, the receive end device may display the resource-related information of the some or all unfinished projection resources directly based on a changed resource list.

In some embodiments, the receive end device may display the resource-related information of the some or all unfinished projection resources to the user in a pop-up window on the first interface, the sidebar T3 (shown in FIG. 6A), or a specified area on the first interface.

In some embodiments, before determining that the display condition is met and displaying the resource-related information of the some or all unfinished projection resources, the receive end device first determine, based on a quantity of unfinished projection resources in the current resource list, whether the resource-related information of the all unfinished projection resources can be completely displayed in a pop-up window, a sidebar, or a specified area for displaying resource-related information. When determining that the resource-related information can be completely displayed, the receive end device may directly display the resource-related information of each unfinished projection resource in the resource list to the user. For example, in FIG. 6A, before and after the receive end device determines that the display condition is met, the first interface changes from the display state Y1 displayed before the display condition is met to the display state Y11 displayed after the display condition is met and the resource-related information of the all unfinished projection resources is displayed; and the receive end device displays, on the first interface in the display state Y11, the resource-related information of the all unfinished projection resources in the sidebar T3. When determining that the resource-related information cannot be completely displayed, the receive end device may display the resource-related information of the some unfinished projection resources in the resource list to the user. For example, in FIG. 6A, before and after the receive end device determines that the display condition is met, the first interface changes from the display state Y1 displayed before the display condition is met to the display state Y12 of displaying the resource-related information of the some unfinished projection resources after the display condition is met; and the receive end device displays, on the first interface in the display state Y12, the resource-related information of the some unfinished projection resources in the sidebar T3.

In some embodiments, when displaying the resource-related information of the some or all unfinished projection resources to the user, the receive end device may display the resource-related information from early to late based on a projection ranking. The resource-related information that is of the unfinished projection resource and that is displayed by the receive end device on the first interface may be displayed in a list, so that a sequence of the unfinished projection resource in the list may correspondingly indicate a projection ranking corresponding to the unfinished projection resource. For example, on the first interface in the display states Y11 and Y12 in FIG. 6A, the receive end device displays the "resource-related information of the unfinished projection resource" in the sidebar T3 in a list, and displays the unfinished projection resource in the list from early to late based on the projection ranking. Refer to FIG. 6A. On the first interface in the display states Y11 and Y12, a projection ranking of a plurality of unfinished projection resources in the sidebar T3 is the first projection resource U1, the projection resource U31, and the projection resource U32 from early to late.

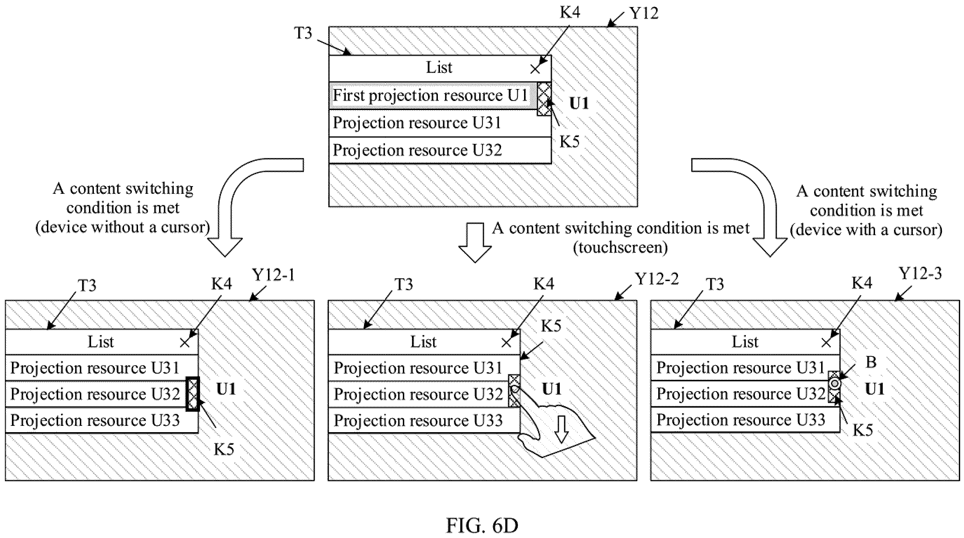

In some embodiments, in a case in which the receive end device displays, on the first interface, only the resource-related information of the some unfinished projection resources in the resource list (as shown in FIG. 6A, only the resource-related information of the some unfinished projection resources is displayed on the first interface in the display state Y12), when determining that a display content switching condition is met, the receive end device may further switch the resource-related information of the unfinished projection resource displayed on the first interface. For example, it is assumed that all unfinished projection resources in the current resource list include the first projection resource U1, the projection resource U31, the projection resource U32, a projection resource U33, and a projection resource U34. If at most the first projection resource U1, the projection resource U31, and the projection resource U32 can be displayed in the sidebar T3 on the first interface in the display state Y12 in FIG. 6A, when determining that the display content switching condition is met, the receive end device may switch the resource-related information of the unfinished projection resource displayed on the first interface, to display, to the user, the projection resource U31, the projection resource U32, and the projection resource U33 in the sidebar T3 on the first interface in display states Y12-1, Y12-2, and Y12-3 in FIG. 6D.

In some embodiments, that the display content switching condition is met may include: a resource-related information switching request sent by the user is detected and/or duration in which the resource-related information of the unfinished projection resource is currently displayed exceeds a switching duration threshold.

In some embodiments, in a case in which the receive end device displays the resource-related information of the some unfinished projection resources to the user on the first interface, the receive end device may automatically switch to display the resource-related information of the unfinished projection resources to the user. After displaying the resource-related information of the some unfinished projection resources to the user, the receive end device performs user operation detection. If it is not detected that duration of a user operation exceeds the switching duration threshold, the receive end device may determine that the display content switching condition is met, and the receive end device may switch to display the resource-related information of the unfinished projection resource based on a preset speed of automatically switching the resource-related information. The switching duration threshold may be set based on a quantity of unfinished projection resources corresponding to the resource-related information displayed on the first interface to the user. A larger quantity indicates a larger switching duration threshold, to ensure that the user can clearly view the displayed resource-related information before automatic switching. For example, it is assumed that the switching duration threshold is 3s. When detecting no user operation, the receive end device may switch resource-related information of a currently displayed unfinished projection resource once every 3s.

In some embodiments, when displaying the resource-related information of the some or all unfinished projection resources to the user on the first interface, the receive end device may display a sliding control to the user on the first interface. The sliding control may slide on the first interface in response to a movement operation of the user. When detecting a movement operation performed by the user on the sliding control, the receive end device generates a resource-related information switching request based on the movement operation. In this way, the user can view the resource-related information of the all unfinished projection resources in the resource list by controlling the sliding control. The resource-related information switching request may include information that describes movement of the sliding control, such as a moving speed, a distance, and a direction of the sliding control, and a movement stop location, so that the receive end device can determine a content switching speed based on the information, to implement switching of the resource-related information of the unfinished projection resource displayed on the first interface. The sliding control can be displayed in a pop-up window or a sidebar in which the resource-related information of the unfinished projection resource is displayed (for example, a sliding control K5 displayed on a side of the sidebar T3 on the first interface in the display state Y12 in FIG. 6A) or a specified area.

In some embodiments, a sliding operation that is detected by the receive end device and performed on the sliding control may be performed by the user in any one of the following manners: The user performs the sliding operation by touching a display, with a touch function, of the receive end device; the user performs the sliding operation by operating the physical button of the receive end device; or the user performs the sliding operation by operating the external input device of the receive end device.

For example, as shown in FIG. 6D, in a process of displaying the first interface in the display state Y12 to the user, the receive end device displays, in the sidebar T3, the resource-related information of the some unfinished projection resources in the resource list. The unfinished projection resources in the current resource list include the first projection resource U1, the projection resource U31, the projection resource U32, the projection resource U33, and the projection resource U34.

As shown in FIG. 6D, if detecting that the user drags the sliding control K5 by using a finger or a stylus, the receive end device may display the first interface in the display state Y12-2 in FIG. 6D to the user, and switch, based on a speed and a direction of dragging the sliding control K5, the resource-related information of the unfinished projection resource displayed in the sidebar T3. If detecting that the user directly moves the resource-related information of the unfinished projection resource by using a finger or a stylus, the receive end device may directly switch the resource-related information of the unfinished projection resource.

As shown in FIG. 6D, if detecting that the user controls, by using the device without a cursor, the sliding control K5 to move, the receive end device may display the first interface in the display state Y12-1 in FIG. 6D to the user. The sliding control K5 is highlighted on the first interface in the display state Y12-1, and the receive end device may select and control, based on an operation performed by the user on the device without a cursor, the sliding control K5 to move up and down. In a process of moving the sliding control K5, the receive end device switches, based on a speed and a direction of moving the sliding control K5, the resource-related information of the unfinished projection resource displayed in the sidebar T3. For example, if the device without a cursor is a remote control, after determining that the user selects K5, the receive end device may move K5 based on a detected operation performed by the user on an "Up" button or a "Down" button of the remote control.

As shown in FIG. 6D, if detecting that the user controls, by using the device with a cursor, the sliding control K5 to move, the receive end device may display the first interface in the display state Y12-3 in FIG. 6D to the user. A cursor B corresponding to the device with a cursor is displayed on the first interface in the display state Y12-3. The receive end device may select the sliding control K5 by using the cursor B corresponding to the device with a cursor, and control the sliding control K5 to move up and down. In a process of moving the sliding control K5, the receive end device switches, based on a speed and a direction of moving the sliding control K5, the resource-related information of the unfinished projection resource displayed in the sidebar T3. Alternatively, the receive end device may move, based on the operation performed by the user on the device with a cursor, the cursor B to an area or a location in which the resource-related information of the unfinished projection resource is displayed. Then, the receive end device switch the resource-related information of the unfinished projection resource displayed in the sidebar T3 based on an operation performed by the user on a sliding button (for example, a mouse scroll wheel) in the device with a cursor. For example, if the device with a cursor is a mouse, after determining that the user selects K5 by using the mouse (it may be determined that K5 is selected when it is detected that a cursor B corresponding to the mouse is moved to an area in which K5 is located and a left mouse button is clicked), the receive end device may move K5 based on a detected "up" or "down" movement performed by the user on the mouse. Alternatively, after determining that the user moves a cursor B corresponding to the mouse to an area (for example, an area in which the sidebar T3 is located) in which the resource-related information of the unfinished projection resource is displayed, the receive end device may directly switch the resource-related information of the displayed unfinished projection resource based on a detected scrolling operation performed by the user on a mouse scroll wheel.

In some embodiments, when a physical button for sending the resource-related information switching request is disposed on the external input device, and it is detected that the physical button is triggered, it may also be determined that the user sends the resource-related information switching request by controlling the external input device.

In some embodiments, when a physical button for sending the resource-related information switching request is disposed on the receive end device, and it is detected that the physical button is triggered, it may be determined that the user sends the resource-related information switching request by controlling the physical button of the receive end device.

In a possible implementation, the method may further include: In a process of displaying the resource-related information of the some or all unfinished projection resources to the user, when a display stop condition is met, the receive end device stops displaying the resource-related information on the first interface. For example, in a process of displaying the first interface in the display states Y11 and Y12 shown in FIG. 6A and the first interface in the display states Y12-1, Y12-2, and Y12-3 shown in FIG. 6D to the user, if determining that the display stop condition is met, the receive end device stops displaying the resource-related information on the first interface, and the first interface switches from the display states Y11, Y12, Y12-1, Y12-2, and Y12-3 to the display state Y1 in FIG. 6A.

In a possible implementation, that the receive end device determines that the receive end device meets a display stop condition may include at least one of the following: The receive end device receives a projection resource list display stop request; and that duration of an operation performed by the user on resource-related information exceeds a display stop duration threshold is not detected after resource information is displayed.

In some embodiments, the display stop duration threshold is greater than the switching duration threshold, to ensure that before display of the resource-related information is stopped, the user can clearly view the resource-related information to be viewed by the user. The display stop duration threshold may be set based on the quantity of unfinished projection resources in the current resource list. A larger quantity may correspond to a larger display stop duration threshold. This can also ensure that, before display of the resource-related information is stopped, the user can clearly view the resource-related information to be viewed by the user. For example, it is assumed that the display stop duration threshold is 15s. In a process of displaying the resource-related information of the unfinished projection resource to the user, if no user operation is detected from the start of display, when duration between a current moment and a start moment at which the resource-related information starts to be displayed reaches 15s, the receive end device may determine that the display stop condition is met. In a process of displaying the resource-related information of the unfinished projection resource to the user, if a user operation is detected after display starts, when duration between a current moment and a detected moment at which a previous operation of the user is stopped reaches 15s, the receive end device may determine that the display stop condition is met.

In some embodiments, when displaying the resource-related information of the some or all unfinished projection resources to the user on the first interface, the receive end device may display a display stop control to the user on the first interface. The display stop control may be triggered in response to an operation of the user. When detecting that the display stop control is triggered, the receive end device determines that the projection resource list display stop request is received. In this way, the user can stop, by triggering the display stop control, displaying the resource-related information of the unfinished projection resource on the first interface.

In some embodiments, the user may trigger the display stop control by controlling the transmit end device, the display of the receive end device, the physical button of the receive end device, and/or the external input device of the receive end device. An implementation of triggering the display stop control is similar to the implementation of triggering the third control K3. The implementation of triggering the display stop control may be set with reference to a process of triggering the third control K3. The following uses only an example for schematic description. For example, it is assumed that the receive end device currently displays the first interface in the display state Y12 in FIG. 6A to the user, displays the resource-related information of the unfinished projection resource to the user in the sidebar T3, and displays a display stop control K4 to the user in the sidebar T3. If the display of the receive end device is a touchscreen, when detecting a trigger operation like touch and hold or tapping performed by the user by using a finger or a stylus on the display stop control K4, the receive end device determines that the display stop control K4 is triggered. When detecting a determining operation performed by the user by using the device without a cursor like a remote control on the display stop control K4, the receive end device determines that the display stop control K4 is triggered. When detecting that the user moves, by using the device with a cursor like a mouse, a corresponding cursor B to an area in which the display stop control K4 is located and performs a determining operation (for example, clicking a left mouse button), the receive end device determines that the display stop control K4 is triggered.

In some embodiments, the physical buttons for sending the projection resource list display stop request are disposed on the receive end device and/or the transmit end device. If detecting that the physical button that is disposed on the receive end device and that corresponds to the projection resource list display stop request is triggered, the receive end device may generate the projection resource list display stop request. If detecting that the physical button that is disposed on the transmit end device and that corresponds to the projection resource list display stop request is triggered, the transmit end device may generate the projection resource list display stop request, and send the request to the receive end device.

In some embodiments, the display of the transmit end device may be a control interface that is displayed to the user and that is used to operate the receive end device, and a control for sending the projection resource list display stop request may be displayed on the control interface. When detecting that the control is triggered, the transmit end device generates the projection resource list display stop request, and sends the request to the receive end device.

It should be noted that the foregoing manner in which the user sends the projection resource list display stop request by controlling the transmit end device, the touchscreen of the receive end device, or the external input device of the receive end device is merely an example implementation provided in this application. A person skilled in the art may set an implementation of the projection resource list display stop request based on actual requirements. This is not limited in this application.

In a possible implementation, the method may further include: In response to a received resource list viewing request, the receive end device sends the resource-related information of each unfinished projection resource in the resource list to a transmit end device that sends the resource list viewing request, so that the transmit end device that sends the resource list viewing request displays the resource-related information of each unfinished projection resource.

The transmit end device that sends the resource list viewing request may be any transmit end device that establishes a connection to the receive end device. After receiving the resource-related information of each unfinished projection resource, the transmit end device that sends the resource list viewing request may display the resource-related information on the display of the transmit end device in a form of a pop-up window or the like.

In a possible implementation, the method may further include: When determining that a time interval between the current moment and a start moment of projection display of a next unfinished projection resource is a preset interval, the receive end device may first send a projection display prompt message to a transmit end device corresponding to the next unfinished projection resource that is to be displayed through projection, so that a transmit end device that receives the projection display prompt message sends a projection display prompt to the user. The projection display prompt message may include a start moment of a next third projection resource for projection display, duration that needs to be occupied for projection display, an end moment, information (such as a location and a name) of the receive end device, and the like. An implementation of displaying a prompt through projection is similar to an implementation of the second prompt. Details are not described herein again. For example, the projection display prompt displayed on the display of the transmit end device may include a text prompt like "Projection display of a third projection resource starts at 13:20, and the estimated display duration is 50 minutes. The display ends at 14:10, and starts 5 minutes later. Please get prepared to view". In this way, the user can be reminded to appear in front of the receive end device timely to view the third projection resource that is requested by the receive end device for projection display, so as to avoid missing by the user, and ensure that the user can view the resource on time.

In some embodiments, the preset interval may be short duration such as 10 minutes or 5 minutes, and duration of the preset interval may be adjusted based on user settings. Alternatively, the preset interval may be 0 minutes. In other words, when starting projection display of the third projection resource, the receive end device may send the projection display prompt message to a transmit end device corresponding to the third projection resource.

In a possible implementation, in the implementation 2, step S12 may include: After receiving the first request, the receive end device does not determine whether the second projection resource U2 is the same as an unfinished projection resource in the resource list, but directly updates the resource list based on the request ranking of the second projection resource U2 indicated by the first request.

In some embodiments, an operation performed for updating the resource list in the implementation 2 may include: When determining that the request ranking corresponding to the second projection resource U2 is the immediate projection, the receive end device may immediately display the second projection resource through projection. In addition, the receive end device may record, in the resource list, the second projection resource as a new unfinished projection resource whose current projection ranking is the foremost. In the implementation 2, when determining that the request ranking of the second projection resource U2 is the immediate projection, the receive end device may determine that the second projection resource U2 indicated by the first request is a resource that is applied by the user for immediate projection display. In this case, the receive end device may record, in the resource list, the second projection resource U2 as a new unfinished projection resource whose current projection ranking is the foremost.

In some embodiments, in the implementation 2, because the user needs to immediately perform projection display on the second projection resource U2, display of the first projection resource U1 that is different from the second projection resource U2 and that is not completely displayed is forcibly stopped. In this case, the receive end device may process the first projection resource U1 whose projection display is stopped in any one of the following manner 1 and manner 2:

Manner 1: For the first projection resource U1 whose display is stopped because the first request is received, the receive end device may continue to reserve a projection resource record of the first projection resource U1 in the resource list, add a display progress of the first projection resource U1 to projection information of the projection resource record of the first projection resource U1, and adjust a current projection ranking of the first projection resource U1 to first projection after the second projection resource U2. In other words, a projection ranking of the plurality of unfinished projection resources recorded in the updated resource list is the second projection resource U2, the first projection resource U1, and other unfinished projection resources from early to late. Therefore, after the second projection resource U2 is displayed, the receive end device may continue to display the first projection resource U1 based on the display progress of the first projection resource U1 recorded in the resource list.

Manner 2: For the first projection resource U1 whose display is stopped because the first request is received, a corresponding projection resource record may be directly deleted from the resource list. In other words, a projection ranking of the plurality of unfinished projection resources recorded in the updated resource list is the second projection resource U2 and other projection resources from early to late. Therefore, after the second projection resource U2 is displayed, the receive end device may directly display the other projection resources without re-displaying the first projection resource U1.

In some embodiments, when determining that projection display of the first projection resource U1 needs to be stopped, the receive end device may directly perform step S15. In step S15, display of the first projection resource U1 that is currently displayed through projection is stopped, and projection display of the second projection resource U2 is performed.

In some embodiments, an operation performed for updating the resource list in the implementation 2 may include: when it is determined that the request ranking corresponding to the second projection resource U2 is the reserved projection, recording the second projection resource U2 in the resource list, to display, through projection, the second projection resource U2 after projection display of an unfinished projection resource that is in the resource list and whose projection ranking is before the second projection resource U2 completed.

In some embodiments, in the implementation 2, if the request ranking corresponding to the second projection resource U2 is the sequential projection, the receive end device records, in the resource list, the second projection resource U2 as a final unfinished projection resource. When determining that the request ranking of the second projection resource U2 is the sequential projection, the receive end device may determine that the second projection resource U2 indicated by the first request is a resource that is applied by the user for projection display in a queuing sequence. In this case, the receive end device may add, to the resource list, the second projection resource U2 as the new unfinished projection resource whose current projection ranking is the last, and add the projection resource record corresponding to the second projection resource to the resource list.

In some embodiments, in the implementation 2, if the request ranking corresponding to the second projection resource U2 is the next projection, the receive end device records, in the resource list, the second projection resource U2 as an unfinished projection resource immediately after the first projection resource U1. When the request ranking is the next projection, the receive end device may determine that the second projection resource U2 indicated by the first request is a resource that is applied by the user for projection display next after the first projection resource U1 is displayed. In this case, the receive end device may add, to the resource list, the second projection resource U2 that is displayed through projection as a new unfinished projection resource whose current projection ranking is next one after the first projection resource U1. In other words, a projection resource record corresponding to the second projection resource U2 is added to the resource list.

In some embodiments, in the implementation 2, if the request ranking corresponding to the second projection resource U2 is the specified reserved projection, the receive end device records, in the resource list, the second projection resource U2 based on specified projection time corresponding to the second projection resource U2. When the request ranking is the specified reserved projection, the receive end device may determine that the second projection resource U2 indicated by the first request is a resource that is applied by the user for projection display at specified projection time. In this case, the receive end device may use the second projection resource U2 as a new unfinished projection resource, and add a projection resource record corresponding to the second projection resource U2 in the resource list based on a projection ranking corresponding to the specified projection time of the second projection resource.

This application further provides a projection control apparatus, used in a receive end device. The receive end device maintains a resource list. The resource list is used to record one or more unfinished projection resources. The unfinished projection resource includes a first projection resource that is currently displayed by the receive end device through projection and/or another projection resource that is reserved and waits for projection display. The apparatus includes:
a request receiving module, where the receive end device receives a first request from a transmit end device in a process of displaying the first projection resource through projection, and the first request is used to request to display a second projection resource through projection; and
a first update module, where if a request ranking corresponding to the second projection resource is reserved projection, the receive end device records the second projection resource in the resource list, to display the second projection resource through projection after completing projection display of an unfinished projection resource whose projection ranking is before the second projection resource in the resource list.

In a possible implementation, the apparatus may further include:
an immediate projection module, where the receive end device immediately displays the second projection resource through projection if the request ranking corresponding to the second projection resource is immediate projection.

In a possible implementation, the immediate projection module may include:
a projection display submodule, where if the request ranking corresponding to the second projection resource is the immediate projection, the receive end device stops displaying the first projection resource, and immediately displays the second projection resource through projection; and
a resource list update submodule, where the receive end device deletes the first projection resource recorded in the resource list; or
the receive end device records a display progress of the first projection resource, and does not delete the first projection resource recorded in the resource list, to continue displaying the first projection resource based on the display progress after completing projection display of the second projection resource.

In a possible implementation, the reserved projection includes any one of sequential projection, next projection, and specified reserved projection, and the specified reserved projection corresponds to specified projection time.

In a possible implementation, the first update module may include:
a sequential update submodule, where if the request ranking corresponding to the second projection resource is the sequential projection, the receive end device records the second projection resource as a final unfinished projection resource in the resource list;
a next update submodule, where if the request ranking corresponding to the second projection resource is the next projection, the receive end device records, in the resource list, the second projection resource as an unfinished projection resource immediately after the first projection resource; or
a specified update submodule, where if the request ranking corresponding to the second projection resource is the specified reserved projection, the receive end device records, in the resource list, the second projection resource based on specified projection time corresponding to the second projection resource.

In a possible implementation, the first request further indicates projection information of the second projection resource, projection information of each unfinished projection resource is recorded in the resource list, and the projection information includes a uniform resource identifier URI. The apparatus further includes:
a resource obtaining module, where the receive end device obtains the second projection resource from a server based on a URI of the second projection resource before displaying the second projection resource through projection.

In a possible implementation, the first request further indicates the request ranking of the second projection resource. The apparatus may further include:
a first request ranking determining module, configured to determine, based on the first request, the request ranking corresponding to the second projection resource.

In a possible implementation, the apparatus may further include:
a second request ranking determining module, configured to determine a default request ranking preset in the receive end as the request ranking corresponding to the second projection resource if the first request does not indicate the request ranking of the second projection resource.

In a possible implementation, a projection ranking corresponding to each unfinished projection resource is recorded in the resource list.

In a possible implementation, the receive end device is a device that supports a DLNA protocol and is located in a same local area network as the transmit end device, and the unfinished projection resource in the resource list is a projection resource that is requested by one or more transmit end devices for projection display.

In a possible implementation, the apparatus may further include:
a resource list display module, where the receive end device displays the resource list.

In a possible implementation, the apparatus may further include:
a first information sending module, where in response to a received resource list viewing request, the receive end device sends, resource-related information of each unfinished projection resource in the resource list to a transmit end device that sends the resource list viewing request, so that the transmit end device that sends the resource list viewing request displays the resource-related information of the unfinished projection resource.

In a possible implementation, the apparatus may further include:
a progress sending module, where a projection progress of the second projection resource is sent to the transmit end device that sends the first request, so that the transmit end device displays the projection progress of the second projection resource.

In a possible implementation, the second projection resource includes at least one projectable object, the first request further includes a display ranking of each projectable object in all projectable objects in the second projection resource, and a projection ranking corresponding to each projectable object in the unfinished projection resource is recorded in the resource list. The apparatus further includes:
a projection display module, where in a process of displaying the second projection resource, projection display of each projectable object in the second projection resource is performed from early to late based on the display ranking.

In a possible implementation, the apparatus may further include:
a second information sending module, where the receive end device sends a projection display prompt message to a transmit end device corresponding to a third projection resource in the resource list, and the projection display prompt message indicates the transmit end device corresponding to the third projection resource to give a user a prompt that the third projection resource is to be displayed or is currently displayed.

For beneficial effects of modules of the projection control apparatus used in the receive end device, refer to beneficial effects of corresponding steps in the foregoing projection control method applied to the receive end device. Details are not described herein again.

This application further provides a projection control apparatus, used in a transmit end device. The apparatus includes:
a first receiving module, configured to receive a first input of a user, where the first input is used to trigger a request for displaying a second projection resource through projection;
a first prompt sending module, configured to send a first prompt, where the first prompt reminds the user to indicate a request ranking of the second projection resource;
a second receiving module, configured to: receive a second input of the user, and determine the request ranking of the second projection resource;
a request generation module, configured to generate a first request based on the second projection resource and the request ranking of the second projection resource, where the first request is used to request to display the second projection resource through projection; and
a request sending module, configured to send the first request to a receive end device.

In a possible implementation, the request ranking includes immediate projection or reserved projection, the reserved projection includes any one of sequential projection, next projection, and specified reserved projection, and the specified reserved projection corresponds to specified projection time.

In a possible implementation, the second receiving module may include:
a receiving submodule, configured to: receive the second input of the user on an immediate projection control, and determine the request ranking of the second projection resource as the immediate projection; or receive the second input of the user on a reserved projection control, and determine the request ranking of the second projection resource as the reserved projection.

In a possible implementation, the receiving submodule may include:
a first receiving submodule, configured to: receive a third input of the user on a sequential projection control, and determine the request ranking of the second projection resource as the sequential projection;
a second receiving submodule, configured to: receive a third input of the user on a next projection control, and determine the request ranking of the second projection resource as the next projection; or
a third receiving submodule, configured to: receive a third input of the user on a specified reserved projection control, and determine the request ranking of the second projection resource as the specified reserved projection.

In a possible implementation, the apparatus may further include:
a progress receiving module, configured to: receive a projection progress that is of the second projection resource and that is sent by the receive end device, and display the projection progress of the second projection resource.

In a possible implementation, the second projection resource includes at least one projectable object, and the projectable object includes any one or more of a video, an audio, a document, and a picture.

In a possible implementation, the apparatus may further include:
an object selection module, configured to receive, before the first input of the user is received, a fourth input through which the user selects the at least one projectable object.

In a possible implementation, the apparatus may further include:
a device selection module, configured to display identification information of at least one candidate receive end device before the first request is sent to the receive end device, so that a user selects the receive end device from the at least one candidate receive end device.

In a possible implementation, the apparatus may further include:
a message receiving module, configured to: receive a projection display prompt message sent by the transmit end device, and in response to the projection display prompt message, give the user a prompt that the receive end device is to display or currently displays the second projection resource.

In a possible implementation, the transmit end device is a device that supports a DLNA protocol and that is located in a same local area network as the receive end device.

In a possible implementation, the second projection resource includes a uniform resource identifier URI.

For beneficial effects of modules of the projection control apparatus used in the transmit end device, refer to beneficial effects of corresponding steps in the foregoing projection control method applied to the transmit end device. Details are not described herein again.

FIG. 7 is a schematic diagram of a structure of a transmit end device 100.

As shown in FIG. 7, the transmit end device 100 may include a processor 110, an external memory interface 120, an internal memory 121, a universal serial bus (Universal Serial Bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that, a structure illustrated in this embodiment of this application does not constitute a specific limitation on the transmit end device 100. In some other embodiments of this application, the transmit end device 100 may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The processor may generate an operation control signal based on instruction operation code and a time sequence signal to complete control of instruction fetching and instruction execution.

A memory may be further disposed in the processor 110, and is configured to store instructions and data. In some embodiments, the memory in the processor 110 may be a cache. The memory may store instructions or data just used or frequently used by the processor 110. If the processor 110 needs to use the instructions or the data, the processor 110 may directly invoke the instructions or the data from the memory. This avoids repeated access and reduces waiting time of the processor 110, so that system efficiency is improved.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like. The processor 110 may be connected to a module such as a touch sensor, an audio module, a wireless communication module, a display, and a camera through at least one of the foregoing interfaces.

The processor 110 may perform steps such as step S41 to step S43 performed by the transmit end device according to the projection control method in this application.

It may be understood that an interface connection relationship between the modules illustrated in this embodiment of this application is merely an example for description, and does not constitute a limitation on the structure of the transmit end device 100. In some other embodiments of this application, the transmit end device 100 may alternatively use different interface connection manners in the foregoing embodiments or a combination of a plurality of interface connection manners.

The transmit end device 100 may implement a display function by using a GPU, the display 194, the application processor, and the like. The GPU is a microprocessor for image processing, and connects the display 194 to the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the transmit end device 100 may include one or more displays 194. The display 194 may be configured to display prompts such as a first prompt and a second prompt that are displayed by the transmit end device for a user according to the projection control method in this application.

The transmit end device 100 may implement audio functions such as music playing and recording through the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to code and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The transmit end device 100 may listen to music or output an audio signal of a hands-free call by using the speaker 170A. The speaker 170A may, under the control of the processor 110, send out a first prompt voice or the like that is sent by the transmit end device by using a voice according to the projection control method in this application.

The receiver 170B, also referred to as an "earpiece", is configured to convert an audio electrical signal into a sound signal. When a call is answered or voice information is received by using the transmit end device 100, the receiver 170B may be put close to a human ear to listen to a voice.

The microphone 170C, also referred to as a "mike" or a "mic", is configured to convert a sound signal into an electrical signal. When making a call or sending voice information, a user may make a sound near the microphone 170C through the mouth, to input a sound signal to the microphone 170C. At least one microphone 170C may be disposed in the transmit end device 100. In some other embodiments, two microphones 170C may be disposed in the transmit end device 100, to collect a sound signal and further implement a noise reduction function. In some other embodiments, three, four, or more microphones 170C may alternatively be disposed in the transmit end device 100, to collect a sound signal, implement noise reduction, and identify a sound source, to implement a directional recording function and the like.

The touch sensor 180K is also referred to as a "touch component". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor. The touch sensor may transmit the detected touch operation (for example, a trigger operation for a first control K1 or the like) to the application processor, to determine a touch event type. A visual output related to the touch operation may be provided on the display 194. In some other embodiments, the touch sensor 180K may alternatively be disposed on a surface of the transmit end device 100 at a location different from a location of the display 194.

The button 190 may include a power button, a volume button, and the like. The button 190 may be a mechanical button or a touch button. The transmit end device 100 may receive a button input, and generate a button signal input related to a user setting and function control of the transmit end device 100.

FIG. 8 is a schematic diagram of a structure of a receive end device according to an embodiment of this application.

As shown in FIG. 8, a receive end device 200 may include a processor 101A, a memory 102A, a communication circuit 103A, an antenna 104A, a sensor module 105A, and a display 107A.

The processor 101A may be configured to read and execute computer-readable instructions. During specific implementation, the processor 101A may mainly include a controller, an arithmetic unit, and a register. The controller is mainly responsible for instruction decoding, and sends a control signal for an operation corresponding to the instruction. The arithmetic unit is mainly responsible for storing a register operand, an intermediate operation result, and the like that are temporarily stored during instruction execution. During specific implementation, a hardware architecture of the processor 101A may be an application-specific integrated circuit (ASIC) architecture, an MIPS architecture, an ARM architecture, an NP architecture, or the like. When executing the instruction, the processor 101A may implement operations of steps such as step S11 to step S18 performed by the receive end device in the foregoing projection control method.

In some embodiments, the processor 10 1A may be configured to parse a signal received by the communication circuit 103A.

The memory 102A is coupled to the processor 101A, and is configured to store various software programs and/or a plurality of sets of instructions. During specific implementation, the memory 102A may include a high-speed random access memory, and may further include a non-volatile memory, for example, one or more magnetic disk storage devices, a flash memory device, or another non-volatile solid-state storage device. The memory 102A may store an operating system, for example, an embedded operating system like uCOS, VxWorks, or RTLinux. The memory 102A may further store a communication program, and the communication program may be used to communicate with another device.

The communication circuit 103A may provide a wireless communication solution that is applied to a receive end device and that includes a WLAN (for example, a Wi-Fi network), a BR/EDR, BLE, a GNSS, FM, and the like.

In some other embodiments, the communication circuit 103A may also transmit a signal, so that another device can discover the receive end device.

A wireless communication function of the receive end device may be implemented through the antenna 104A, the communication circuit 103A, a modem processor, or the like.

The antenna 104A may be configured to transmit and receive electromagnetic wave signals. Each antenna in the receive end device may be configured to cover one or more communication frequency bands.

In some embodiments, the communication circuit 103A may have one or more antennas.

The sensor module 105A may include various types of sensor components, such as a touch sensor, that are configured to collect information such as touch information of the receive end device 200.

The receive end device may further include the display 107A. The display 107A may be configured to display an image, prompt information, and the like. The display may be a liquid crystal display (liquid crystal display, LCD), an organic light-emitting diode (organic light-emitting diode, OLED) display, an active-matrix organic light-emitting diode (active-matrix organic light-emitting diode, AMOLED) display, a flexible light-emitting diode (flexible light-emitting diode, FLED) display, a quantum dot light-emitting diode (quantum dot light-emitting diode, QLED) display, or the like. The display 107A is configured to display the projection resource through projection.

In some embodiments, the receive end device may further include a serial interface like an RS-232 interface. The serial interface may be connected to another device, for example, an audio speaker device like a smart speaker, so that the receive end device collaborates with the audio speaker device to play an audio and a video.

It may be understood that the structure shown in FIG. 8 does not constitute a specific limitation on the receive end device. In some other embodiments of this application, the receive end device may include more or fewer components than those shown in the figure, or combine some components, or split some components, or have different component arrangements. The components shown in the figure may be implemented by hardware, software, or a combination of software and hardware.

An embodiment of this application provides a projection apparatus. The apparatus includes a processor and a memory configured to store instructions executable by the processor. When the processor is configured to execute the instructions, the method is implemented.

An embodiment of this application provides a non-volatile computer-readable storage medium. The non-volatile computer-readable storage medium stores computer program instructions. When the computer program instructions are executed by a processor, the foregoing method is implemented.

An embodiment of this application provides a computer program product. The computer program product includes computer-readable code or a non-volatile computer-readable storage medium carrying the computer-readable code. When the computer-readable code is run in a processor of an electronic device, the processor in the electronic device performs the foregoing method.

The computer-readable storage medium may be a tangible device that can retain and store instructions for use by an instruction execution device. The computer-readable storage medium may be, for example, but is not limited to, an electrical storage device, a magnetic storage device, an optical storage device, an electromagnetic storage device, a semiconductor storage device, or any suitable combination thereof. More specific examples (non-exhaustive list) of the computer-readable storage medium include: a portable computer disk, a hard disk drive, a random access memory (Random Access Memory, RAM), a read-only memory (Read-Only Memory, ROM), an erasable programmable read-only memory (Erasable Programmable Read-Only Memory, EPROM or a flash memory), a static random-access memory (Static Random-Access Memory, SRAM), a portable compact disc read-only memory (Compact Disc Read-Only Memory, CD-ROM), a digital versatile disc (Digital Versatile Disc, DVD), a memory stick, a floppy disk, a mechanical coding device, for example, a punching card or a groove protrusion structure that stores instructions, and any suitable combination thereof.

The computer-readable program instructions or code described herein may be downloaded from a computer-readable storage medium to each computing/processing device, or downloaded to an external computer or an external storage device over a network, like the Internet, a local area network, a wide area network, and/or a wireless network. The network may include a copper transmission cable, optical fiber transmission, wireless transmission, a router, a firewall, a switch, a gateway computer and/or an edge server. A network adapter card or network interface in each computing/processing device receives the computer-readable program instructions from the network and forwards the computer-readable program instructions for storage in a computer-readable storage medium in each computing/processing device.

The computer program instructions used to perform operations in this application may be assembly instructions, instruction set architecture (Instruction Set Architecture, ISA) instructions, machine instructions, machine-related instructions, microcode, firmware instructions, status setting data, or source code or target code written in one or any combination of more programming languages. The programming languages include an object-oriented programming language like Smalltalk and C++, and a conventional procedural programming language like "C" or a similar programming language. The computer-readable program instructions may be executed entirely on a user computer, partly on the user computer, as a stand-alone software package, partly on the user computer and partly on a remote computer, or entirely on the remote computer or a server. When a remote computer is involved, the remote computer may be connected to a user computer over any type of network, including a local area network (Local Area Network, LAN) or a wide area network (Wide Area Network, WAN), or may be connected to an external computer (for example, connected by using an Internet service provider over the Internet). In some embodiments, an electronic circuit, for example, a programmable logic circuit, a field-programmable gate array (Field-Programmable Gate Array, FPGA), or a programmable logic array (Programmable Logic Array, PLA), is customized based on status information of computer-readable program instructions. The electronic circuit may execute the computer-readable program instructions, to implement various aspects of this application.

The various aspects of this application are described herein with reference to the flowcharts and/or block diagrams of the method, the apparatus (system), and the computer program product according to embodiments of this application. It should be understood that each block of the flowcharts and/or block diagrams and a combination of blocks in the flowcharts and/or block diagrams may be implemented according to the computer-readable program instructions.

These computer-readable program instructions may be provided to a processor of a general-purpose computer, a special-purpose computer, or another programmable data processing apparatus to produce a machine, so that the instructions, when executed by the processor of the computer or the another programmable data processing apparatus, create an apparatus for implementing functions/acts specified in one or more blocks in the flowcharts and/or block diagrams. These computer-readable program instructions may alternatively be stored in the computer-readable storage medium. These instructions enable a computer, a programmable data processing apparatus, and/or another device to work in a specific manner. Therefore, the computer-readable medium storing the instructions includes an artifact that includes instructions for implementing various aspects of the functions/acts specified in the one or more blocks in the flowcharts and/or the block diagrams.

The computer-readable program instructions may alternatively be loaded onto a computer, another programmable data processing apparatus, or another device, so that a series of operation steps are performed on the computer, the another programmable data processing apparatus, or the another device to produce a computer-implemented process. Therefore, the instructions executed on the computer, the another programmable data processing apparatus, or the another device implement the functions/acts specified in the one or more blocks in the flowcharts and/or block diagrams.

The flowcharts and the block diagrams in the appended drawings illustrate system architectures, functions, and operations of possible implementations of apparatuses, systems, methods, and computer program products according to a plurality of embodiments of this application. In this regard, each block in the flowcharts or block diagrams may represent a module, a program segment, or a part of the instructions, and the module, the program segment, or the part of the instructions includes one or more executable instructions for implementing a specified logical function. In some alternative implementations, a function marked in the block may also occur in a sequence different from that marked in the accompanying drawings. For example, two continuous blocks may actually be executed substantially in parallel, and may sometimes be executed in a reverse order, depending on a function involved.

It should also be noted that each block in the block diagrams and/or the flowcharts, and combinations of the blocks in the block diagrams and/or the flowcharts may be implemented by hardware (for example, a circuit or an ASIC (Application-Specific Integrated Circuit, application-specific integrated circuit)) that performs a corresponding function or action, or may be implemented by a combination of hardware and software, for example, firmware.

Although the present invention is described with reference to embodiments, in a process of implementing the present invention that claims protection, a person skilled in the art may understand and implement another variation of the disclosed embodiments by viewing the accompanying drawings, disclosed content, and the appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Embodiments of this application are described above. The foregoing descriptions are examples, not exhaustive, and not limited to the foregoing disclosed embodiments. Many modifications and variations made without departing from the scope of the described embodiments are apparent to a person of ordinary skill in the art. Selection of terms used in this specification is intended to best explain embodiment principles, actual application or improvements to technologies in the market, or to enable another person of ordinary skill in the art to understand the embodiments disclosed in this specification.

## Claims

1. A projection control method, applied to a receive end device, wherein the receive end device maintains a resource list, the resource list is used to record one or more unfinished projection resources, and the unfinished projection resource comprises a first projection resource that is currently displayed by the receive end device through projection and/or another projection resource that is reserved and waits for projection display; and the method comprises:
receiving, by the receive end device in a process of displaying the first projection resource through projection, a first request from a transmit end device, wherein the first request is used to request to display a second projection resource through projection; and
if a request ranking corresponding to the second projection resource is reserved projection, recording, by the receive end device, the second projection resource in the resource list, to display the second projection resource through projection after completing projection display of an unfinished projection resource whose projection ranking is before the second projection resource in the resource list.

2. The method according to claim 1, wherein the method further comprises:
immediately displaying, by the receive end device, the second projection resource through projection if the request ranking corresponding to the second projection resource is immediate projection.

3. The method according to claim 2, wherein the immediately displaying, by the receive end device, the second projection resource through projection if the request ranking corresponding to the second projection resource is immediate projection specifically comprises:
if the request ranking corresponding to the second projection resource is the immediate projection, stopping, by the receive end device, displaying the first projection resource, and immediately displaying the second projection resource through projection; and
deleting, by the receive end device, the first projection resource recorded in the resource list, or
recording, by the receive end device, a display progress of the first projection resource, and skipping deleting the first projection resource recorded in the resource list, to continue displaying the first projection resource based on the display progress after completing projection display of the second projection resource.

4. The method according to any one of claims 1 to 3, wherein the reserved projection comprises any one of sequential projection, next projection, and specified reserved projection, and the specified reserved projection corresponds to specified projection time.

5. The method according to claim 4, wherein the recording, by the receive end device, the second projection resource in the resource list if a request ranking corresponding to the second projection resource is reserved projection specifically comprises:
if the request ranking corresponding to the second projection resource is the sequential projection, recording, by the receive end device in the resource list, the second projection resource as a final unfinished projection resource;
if the request ranking corresponding to the second projection resource is the next projection, recording, by the receive end device in the resource list, the second projection resource as an unfinished projection resource immediately after the first projection resource; or
if the request ranking corresponding to the second projection resource is the specified reserved projection, recording, by the receive end device in the resource list, the second projection resource based on specified projection time corresponding to the second projection resource.

6. The method according to any one of claims 1 to 5, wherein the first request further indicates projection information of the second projection resource, projection information of each unfinished projection resource is recorded in the resource list, and the projection information comprises a uniform resource identifier URI; and the method further comprises:
obtaining, by the receive end device, the second projection resource from a server based on a URI of the second projection resource before displaying the second projection resource through projection.

7. The method according to any one of claims 1 to 6, wherein the first request further indicates the request ranking of the second projection resource; and the method further comprises:
determining, based on the first request, the request ranking corresponding to the second projection resource.

8. The method according to any one of claims 1 to 6, wherein the method further comprises:
if the first request does not indicate the request ranking of the second projection resource, determining a default request ranking preset in the receive end as the request ranking corresponding to the second projection resource.

9. The method according to any one of claims 1 to 8, wherein a projection ranking corresponding to each unfinished projection resource is recorded in the resource list.

10. The method according to any one of claims 1 to 9, wherein the receive end device is a device that supports a DLNA protocol and is located in a same local area network as the transmit end device, and the unfinished projection resource in the resource list is a projection resource that is requested by one or more transmit end devices for projection display.

11. The method according to any one of claims 1 to 10, wherein the method further comprises:
displaying, by the receive end device, the resource list.

12. The method according to any one of claims 1 to 11, wherein the method further comprises:
sending, by the receive end device in response to a received resource list viewing request, resource-related information of each unfinished projection resource in the resource list to a transmit end device that sends the resource list viewing request, so that the transmit end device that sends the resource list viewing request displays the resource-related information of the unfinished projection resource.

13. The method according to any one of claims 1 to 12, wherein the method further comprises:
sending a projection progress of the second projection resource to the transmit end device that sends the first request, so that the transmit end device displays the projection progress of the second projection resource.

14. The method according to any one of claims 1 to 13, wherein the second projection resource comprises at least one projectable object, the first request further comprises a display ranking of each projectable object in all projectable objects in the second projection resource, and a projection ranking corresponding to each projectable object in the unfinished projection resource is recorded in the resource list; and the method further comprises:
in a process of displaying the second projection resource, performing projection display on each projectable object in the second projection resource from early to late based on the display ranking.

15. The method according to any one of claims 1 to 14, wherein the method further comprises:
sending, by the receive end device, a projection display prompt message to a transmit end device corresponding to a third projection resource in the resource list, wherein the projection display prompt message indicates the transmit end device corresponding to the third projection resource to give a user a prompt that the third projection resource is to be displayed or is currently displayed.

16. A projection control method, applied to a transmit end device, wherein the method comprises:
receiving a first input of a user, wherein the first input is used to trigger a request for displaying a second projection resource through projection;
sending a first prompt, wherein the first prompt reminds the user to indicate a request ranking of the second projection resource;
receiving a second input of the user, and determining the request ranking of the second projection resource;
generating a first request based on the second projection resource and the request ranking of the second projection resource, wherein the first request is used to request to display the second projection resource through projection; and
sending the first request to a receive end device.

17. The method according to claim 16, wherein the request ranking comprises immediate projection or reserved projection, the reserved projection comprises any one of sequential projection, next projection, and specified reserved projection, and the specified reserved projection corresponds to specified projection time.

18. The method according to claim 17, wherein the receiving a second input of the user, and determining the request ranking of the second projection resource specifically comprises:
receiving the second input of the user on an immediate projection control, and determining the request ranking of the second projection resource as the immediate projection; or receiving the second input of the user on a reserved projection control, and determining the request ranking of the second projection resource as the reserved projection.

19. The method according to claim 18, wherein the determining the request ranking of the second projection resource as the reserved projection specifically comprises:
receiving a third input of the user on a sequential projection control, and determining the request ranking of the second projection resource as the sequential projection;
receiving a third input of the user on a next projection control, and determining the request ranking of the second projection resource as the next projection; or
receiving a third input of the user on a specified reserved projection control, and determining the request ranking of the second projection resource as the specified reserved projection.

20. The method according to any one of claims 17 to 19, wherein the method further comprises:
receiving a projection progress that is of the second projection resource and that is sent by the receive end device, and displaying the projection progress of the second projection resource.

21. The method according to any one of claims 16 to 20, wherein the second projection resource comprises at least one projectable object, and the projectable object comprises any one or more of a video, an audio, a document, and a picture.

22. The method according to claim 21, wherein before the receiving a first input of a user, the method further comprises:
receiving a fourth input through which the user selects the at least one projectable object.

23. The method according to any one of claims 16 to 22, wherein before the sending the first request to a receive end device, the method further comprises:
displaying identification information of at least one candidate receive end device, so that the user selects the receive end device from the at least one candidate receive end device.

24. The method according to any one of claims 16 to 23, wherein the method further comprises:
receiving a projection display prompt message sent by the transmit end device, and in response to the projection display prompt message, giving the user a prompt that the receive end device is to display or currently displays the second projection resource.

25. The method according to any one of claims 16 to 24, wherein the transmit end device is a device that supports a DLNA protocol and that is located in a same local area network as the receive end device.

26. The method according to any one of claims 16 to 25, wherein the second projection resource comprises a uniform resource identifier URI.

27. An electronic device, comprising:
a processor; and
a memory, configured to store instructions that may be executed by the processor, wherein
the processor is configured to execute the instructions, to enable the electronic device to implement the method according to any one of claims 1 to 15 or implement the method according to any one of claims 16 to 26.

28. Anon-volatile computer-readable storage medium, storing computer program instructions, wherein when the computer program instructions are executed by a processor, the method according to any one of claims 1 to 15 is implemented, or the method according to any one of claims 16 to 26 is implemented.

29. A computer program product, comprising computer-readable code, wherein when the computer-readable code is run in an electronic device, the electronic device performs the method according to any one of claims 1 to 15, or performs the method according to any one of claims 16 to 26.
